(19) Europäisches Patentamt
European Patent Office
Office européen des brevets

(11) EP 4 759 878 A1

(12) EUROPEAN PATENT APPLICATION
published in accordance with Art. 153(4) EPC

(43) Date of publication:
**17.06.2026 Bulletin 2026/25**

(21) Application number: **24851958.9**

(22) Date of filing: **09.08.2024**

(51) International Patent Classification (IPC):
***C08L 67/02*** (2006.01) ***C08L 69/00*** (2006.01)

(52) Cooperative Patent Classification (CPC):
**C08L 67/02; C08L 69/00**

(86) International application number:
**PCT/JP2024/028658**

(87) International publication number:
**WO 2025/033541 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.08.2023 JP 2023130434**
**09.08.2023 JP 2023130436**

(71) Applicant: **Mitsubishi Chemical Corporation**
**Tokyo 100-8251 (JP)**

(72) Inventors:
- **SUZUKI, Masami**
**Tokyo 100-8251 (JP)**
- **SUZUKI, Takayuki**
**Tokyo 100-8251 (JP)**

(74) Representative: **Hoffmann Eitle**
**Patent- und Rechtsanwälte PartmbB**
**Arabellastraße 30**
**81925 München (DE)**

# (54) RESIN COMPOSITION, PELLETS, AND MOLDED ARTICLE

(57) Provided is a resin composition, pellets, and a molded article. The resin composition contains from 5 to 50 parts by mass of a flame retardant relative to a total of 100 parts by mass of a polyalkylene terephthalate resin and a polycarbonate resin. A mass ratio of the polyalkylene terephthalate resin to the polycarbonate resin in the total of 100 parts by mass of the polyalkylene terephthalate resin and the polycarbonate resin is from 10/90 to 90/10. The polycarbonate resin contains a recycling-derived polycarbonate resin, and the recycling-derived polycarbonate resin has a branching amount of from 50 to 3500 ppm by mass.

EP 4 759 878 A1

## Description

Technical Field

The present invention relates to a resin composition, pellets, and a molded article.

Background Art

Resin compositions containing a polyalkylene terephthalate resin such as a polybutylene terephthalate resin and a polycarbonate resin have been examined in the related art (for example, see Patent Literature 1).

Such resin compositions are widely used in electrical and electronic equipment components, interior and exterior automotive components, other electrical components, machine components, and the like.

Citation List

Patent Literature

Patent Literature 1: WO 2021/186025 A1

Summary of Invention

Technical Problem

In recent years, the use of recycled products as thermoplastic resins has been examined from the viewpoint of environmental load. However, when a recycled thermoplastic resin is used, various physical properties of the obtained molded article tend to be inferior.

Under such circumstances, the present invention attempts to use recycled polycarbonate resin. Specifically, an object of the present invention is to provide a resin composition that contains a polyalkylene terephthalate resin, a recycled polycarbonate resin, and a flame retardant and can achieve physical properties comparable to those obtained when using a virgin polycarbonate resin, or physical properties better than those obtained in a case of using only a virgin polycarbonate resin, and to also provide pellets and a molded article.

Solution to Problem

The present inventors conducted studies to solve the above problems, and as a result, discovered that the above problems can be solved by using a predetermined polycarbonate resin as a recycling-derived polycarbonate resin and blending a flame retardant therewith.

Specifically, the above problems are solved by the following means.

<1> A resin composition containing from 5 to 50 parts by mass of a flame retardant relative to a total of 100 parts by mass of a polyalkylene terephthalate resin and a polycarbonate resin, a mass ratio of the polyalkylene terephthalate resin to the polycarbonate resin being from 10/90 to 90/10 in the total of 100 parts by mass of the polyalkylene terephthalate resin and the polycarbonate resin, the polycarbonate resin containing a recycling-derived polycarbonate resin, and the recycling-derived polycarbonate resin having a branching amount of from 50 to 3500 ppm by mass.

<2> The resin composition according to <1>, containing from 1 to 30 parts by mass of an elastomer relative to the total of 100 parts by mass of the polyalkylene terephthalate resin and the polycarbonate resin, the mass ratio of the polyalkylene terephthalate resin to the polycarbonate resin being from 80/20 to 20/80 in the total of 100 parts by mass of the polyalkylene terephthalate resin and the polycarbonate resin, and the recycling-derived polycarbonate resin having a melt volume rate (MVR) of from 2 to 11 $cm^3$/10 minutes as measured in accordance with ISO 1133 under conditions including a temperature of 300°C and a load of 1.20 kgf.

<3> The resin composition according to <1> or <2>, wherein the recycling-derived polycarbonate resin contains from 10 to 80 ppm by mass of bisphenol A.

<4> The resin composition according to <1>, wherein the recycling-derived polycarbonate resin has a melt volume rate (MVR) of from 4 to 30 $cm^3$/10 minutes as measured in accordance with ISO 1133 under conditions including a temperature of 300°C and a load of 1.20 kgf.

<5> The resin composition according to any one of <1> to <4>, further containing from 0.01 to 2 parts by mass of a transesterification inhibitor relative to the total of 100 parts by mass of the polyalkylene terephthalate resin and the polycarbonate resin.

<6> The resin composition according to any one of <1> to <5>, wherein a polybutylene terephthalate resin accounts for 50 mass% or more of the polyalkylene terephthalate resin.
<7> The resin composition according to any one of <1> to <6>, wherein the flame retardant includes a bromine-based flame retardant.
<8> The resin composition according to any one of <1> to <7>, further containing from 3 to 30 parts by mass of an elastomer relative to the total of 100 parts by mass of the polyalkylene terephthalate resin and the polycarbonate resin.
<9> The resin composition according to any one of <1> to <8>, wherein the recycling-derived polycarbonate resin contains aluminum element at a proportion of from 0.2 to 1000 ppm by mass and iron element at a proportion of from 0.2 to 100 ppm by mass.
<10> The resin composition according to any one of <1> to <9>, wherein the resin composition is molded into a test piece having a thickness of 0.74 mm or 1.0 mm for a UL-94 test and satisfies a flame retardancy of V-0 according to the UL-94 test.
<11> The resin composition according to any one of <1> to <10>, wherein the recycling-derived polycarbonate resin includes at least one of a polycarbonate resin derived from a bottle, a polycarbonate resin derived from a disk, a polycarbonate resin derived from a sheet, a polycarbonate resin derived from a meter cover, or a polycarbonate resin derived from a headlamp lens.
<12> The resin composition according to any one of <1> to <11>, wherein the recycling-derived polycarbonate resin has a melt volume rate (MVR) of from 4 to 30 $cm^3$/10 minutes as measured in accordance with ISO 1133 under conditions including a temperature of 300°C and a load of 1.20 kgf, the resin composition further contains from 0.01 to 2 parts by mass of a transesterification inhibitor relative to the total of 100 parts by mass of the polyalkylene terephthalate resin and the polycarbonate resin,
the polyalkylene terephthalate resin includes a polybutylene terephthalate resin, the flame retardant includes a bromine-based flame retardant, the resin composition further contains from 1 to 30 parts by mass of an elastomer relative to the total of 100 parts by mass of the polyalkylene terephthalate resin and the polycarbonate resin, the recycling-derived polycarbonate resin contains aluminum element at a proportion from 0.2 to 1000 ppm by mass and iron element at a proportion from 0.2 to 100 ppm by mass, and the resin composition further contains from 0.1 to 3 parts by mass of carbon black relative to the total of 100 parts by mass of the polyalkylene terephthalate resin and the polycarbonate resin.
<13> The resin composition according to any one of <1> to <12>, wherein the mass ratio of the polyalkylene terephthalate resin to the polycarbonate resin in the total of 100 parts by mass of the polyalkylene terephthalate resin and the polycarbonate resin is from 30/70 to 55/45.
<14> The resin composition according to any one of <1> to <13>, wherein the recycling-derived polycarbonate resin includes a polycarbonate resin derived from a bottle and/or a sheet.
<15> The resin composition according to any one of <1> to <14>, wherein the mass ratio of the polyalkylene terephthalate resin to the polycarbonate resin in the total of 100 parts by mass of the polyalkylene terephthalate resin and the polycarbonate resin is from 30/70 to 55/45, the recycling-derived polycarbonate resin includes a polycarbonate resin derived from a bottle and/or a sheet, the resin composition further contains from 0.01 to 2 parts by mass of a transesterification inhibitor relative to the total of 100 parts by mass of the polyalkylene terephthalate resin and the polycarbonate resin, and the polyalkylene terephthalate resin includes a polybutylene terephthalate resin.
<16> Pellets of the resin composition described in any one of <1> to <15>.
<17> A molded article formed from the resin composition described in any one of <1> to <15>.
<18> A molded article formed from the pellets described in <16>.

The above problems are also solved by the following means.
<2-1> A resin composition containing, relative to a total of 100 parts by mass of a polyalkylene terephthalate resin and a polycarbonate resin, from 3 to 30 parts by mass of an elastomer and from 5 to 50 parts by mass of a flame retardant, a mass ratio of the polyalkylene terephthalate resin to the polycarbonate resin being from 80/20 to 20/80 in the total of 100 parts by mass of the polyalkylene terephthalate resin and the polycarbonate resin, the polycarbonate resin including a recycling-derived polycarbonate resin, and the recycling-derived polycarbonate resin having a melt volume rate (MVR) of from 2 to 11 $cm^3$/10 minutes as measured in accordance with ISO 1133 under conditions including a temperature of 300°C and a load of 1.20 kgf and having a branching amount of from 50 to 3500 ppm by mass.
<2-2> The resin composition according to <2-1>, wherein the mass ratio of the polyalkylene terephthalate resin to the polycarbonate resin in the total of 100 parts by mass of the polyalkylene terephthalate resin and the polycarbonate resin is from 30/70 to 55/45.
<2-3> The resin composition according to <2-1> or <2-2>, wherein the recycling-derived polycarbonate resin contains a polycarbonate resin derived from a bottle and/or a sheet.
<2-4> The resin composition according to any one of <2-1> to <2-3>, further containing from 0.01 to 2 parts by mass of a transesterification inhibitor relative to the total of 100 parts by mass of the polyalkylene terephthalate resin and

the polycarbonate resin.

<2-5> The resin composition according to any one of <2-1> to <2-4>, wherein the polyalkylene terephthalate resin includes a polybutylene terephthalate resin.

<2-6> The resin composition according to any one of <2-1> to <2-5>, wherein the mass ratio of the polyalkylene terephthalate resin to the polycarbonate resin in the total of 100 parts by mass of the polyalkylene terephthalate resin and the polycarbonate resin is from 30/70 to 55/45, the recycling-derived polycarbonate resin contains a polycarbonate resin derived from a bottle and/or a sheet, the resin composition further contains from 0.01 to 2 parts by mass of a transesterification inhibitor relative to the total of 100 parts by mass of the polyalkylene terephthalate resin and the polycarbonate resin, and the polyalkylene terephthalate resin includes a polybutylene terephthalate resin.

<2-7> Pellets of the resin composition described in any one of <2-1> to <2-6>.

<2-8> A molded article formed from the resin composition described in any one of <2-1> to <2-6>.

<2-9> A molded article formed from the pellets described in <2-7>.

The above problems are also solved by the following means.

<3-1> A resin composition containing from 5 to 50 parts by mass of a flame retardant relative to a total of 100 parts by mass of a polyalkylene terephthalate resin and a polycarbonate resin, a mass ratio of the polyalkylene terephthalate resin to the polycarbonate resin being from 10/90 to 90/10 in the total of 100 parts by mass of the polyalkylene terephthalate resin and the polycarbonate resin, the polycarbonate resin containing a recycling-derived polycarbonate resin, and the recycling-derived polycarbonate resin containing from 10 to 80 ppm by mass of bisphenol A and having a branching amount of from 50 to 3500 ppm by mass.

<3-2> The resin composition according to <3-1>, wherein the recycling-derived polycarbonate resin has a melt volume rate (MVR) of from 4 to 30 $cm^3$/10 minutes as measured in accordance with ISO 1133 under conditions including a temperature of 300°C and a load of 1.20 kgf.

<3-3> The resin composition according to <3-1> or <3-2>, further containing from 0.01 to 2 parts by mass of a transesterification inhibitor relative to the total of 100 parts by mass of the polyalkylene terephthalate resin and the polycarbonate resin.

<3-4> The resin composition according to any one of <3-1> to <3-3>, wherein the polyalkylene terephthalate resin includes a polybutylene terephthalate resin.

<3-5> The resin composition according to any one of <3-1> to <3-4>, wherein the flame retardant includes a bromine-based flame retardant.

<3-6> The resin composition according to any one of <3-1> to <3-5>, further containing from 1 to 30 parts by mass of an elastomer relative to the total of 100 parts by mass of the polyalkylene terephthalate resin and the polycarbonate resin.

<3-7> The resin composition according to any one of <3-1> to <3-6>, wherein the recycling-derived polycarbonate resin contains aluminum element at a proportion of from 0.2 to 1000 ppm by mass and iron element at a proportion of from 0.2 to 100 ppm by mass.

<3-8> The resin composition according to any one of <3-1> to <3-7>, further containing from 0.1 to 3 parts by mass of carbon black relative to the total of 100 parts by mass of the polyalkylene terephthalate resin and the polycarbonate resin.

<3-9> The resin composition according to any one of <3-1> to <3-8>, wherein the resin composition is molded into a test piece with a thickness of 0.74 mm for a UL-94 test and satisfies a flame retardancy of V-0 according to the UL-94 test.

<3-10> The resin composition according to any one of <3-1> to <3-9>, wherein the recycling-derived polycarbonate resin includes at least one of a polycarbonate resin derived from a bottle, a polycarbonate resin derived from a meter cover, or a polycarbonate resin derived from a headlamp lens.

<3-11> The resin composition according to any one of <3-1> to <3-10>, wherein the recycling-derived polycarbonate resin has a melt volume rate (MVR) of from 4 to 30 $cm^3$/10 minutes as measured in accordance with ISO 1133 under conditions including a temperature of 300°C and a load of 1.20 kgf, the resin composition further contains from 0.01 to 2 parts by mass of a transesterification inhibitor relative to the total of 100 parts by mass of the polyalkylene terephthalate resin and the polycarbonate resin, the polyalkylene terephthalate resin includes a polybutylene terephthalate resin, the flame retardant includes a bromine-based flame retardant, the resin composition further contains from 1 to 30 parts by mass of an elastomer relative to the total of 100 parts by mass of the polyalkylene terephthalate resin and the polycarbonate resin, the recycling-derived polycarbonate resin contains aluminum element at a proportion from 0.2 to 1000 ppm by mass and iron element at a proportion from 0.2 to 100 ppm by mass, and the resin composition further contains from 0.1 to 3 parts by mass of carbon black relative to the total of 100 parts by mass of the polyalkylene terephthalate resin and the polycarbonate resin.

<3-12> Pellets of the resin composition described in any one of <3-1> to <3-11>.

<3-13> A molded article formed from the resin composition described in any one of <3-1> to <3-11>.

<3-14> A molded article formed from the pellets described in <3-12>.

Advantageous Effects of Invention

According to the present invention, a resin composition, pellets, and a molded article can be provided with the resin composition containing a polyalkylene terephthalate resin, a recycled polycarbonate resin, and a flame retardant and achieving physical properties comparable to those obtained when using a virgin polycarbonate resin, or physical properties better than those obtained in a case of using only a virgin polycarbonate resin.

Description of Embodiments

An embodiment for carrying out the present invention (hereinafter, referred to simply as the "present embodiment") will be described below in detail. It should be noted that the present embodiment described below is an example for explaining the present invention, and the present invention is not limited to the present embodiment only.

In the present specification, an expression of numerical values "from X to Y" is used to denote a range in which X and Y are included as lower and upper limit values.

In the present specification, unless otherwise specified, the various physical property values and characteristic values are values obtained at 23°C.

In a case in which a measurement method or the like described by a standard presented in the present specification varies depending on the year, unless otherwise specified, the measurement method is based on the standard as of January 1, 2023.

A resin composition of the present embodiment is characterized in that the resin composition contains from 5 to 50 parts by mass of a flame retardant relative to a total of 100 parts by mass of a polyalkylene terephthalate resin and a polycarbonate resin, and that a mass ratio of the polyalkylene terephthalate resin to the polycarbonate resin in the total of 100 parts by mass of the polyalkylene terephthalate resin and the polycarbonate resin is from 10/90 to 90/10, the polycarbonate resin contains a recycling-derived polycarbonate resin, and the recycling-derived polycarbonate resin has a branching amount of from 50 to 3500 ppm by mass.

With such a configuration, a resin composition containing a polyalkylene terephthalate resin, a recycling-derived polycarbonate resin (which may also be referred to as a "recycled polycarbonate resin" in the present specification), and a flame retardant, and capable of achieving physical properties comparable to those obtained when using a virgin polycarbonate resin, or physical properties better than those obtained in a case of using only a virgin polycarbonate resin, can be obtained.

For example, when a flame retardant is blended in a resin composition, normally the impact resistance tends to be inferior, but in the present embodiment, high impact resistance tends to be achieved by using a predetermined recycled polycarbonate resin. In addition, the resin composition of the present embodiment tends to be able to maintain high flame retardancy, the flame retardancy is equivalent to or higher than that in the case of using a virgin polycarbonate resin, and a recycled product can be used, and therefore, the environmental load can be reduced.

Furthermore, when a recycled polycarbonate resin is used, the nominal strain at break tends to be inferior. However, in the present embodiment, the use of a predetermined recycled polycarbonate resin tends to improve the nominal strain at break. In addition, the crystallization temperature (Tc) of the resin composition of the present embodiment tends to be increased.

It is known that a polycarbonate resin having a larger branching amount generally has better flame retardancy. The reason for this is thought to be that the polycarbonate molecules are entangled with each other due to the large number of branched structures, and thereby shape changes of a molded article when combusted do not easily occur, and dripping and the like are effectively suppressed. In addition, it is considered that by combusting and scorching the surface of a molded article, the scorched surface is less likely to collapse, and the combustion time can be shortened.

However, the present inventors conducted studies and discovered that when a polycarbonate resin is used in combination with a polyalkylene terephthalate resin, a polycarbonate resin having a smaller branching amount results in better flame retardancy. The reason for this is presumed to be that when the number of branches is large, the hydroxyl groups at the terminals of the polycarbonate and the polyalkylene terephthalate resin are easily transesterified, and in association therewith, the amount of low molecular weight components increases and the thermal stability decreases.

In particular, a plurality of raw materials are mixed in a recycled polycarbonate resin, and therefore the recycled polycarbonate resin often includes a polycarbonate resin having a branched structure. However, examinations conducted by the present inventors indicated that by setting the branching amount of the recycling-derived polycarbonate resin to a range from 50 to 3500 ppm by mass, flame retardancy comparable to that in a case of using a virgin polycarbonate resin or flame retardancy better than that in a case of using only a virgin polycarbonate resin can be achieved. As a result, the environmental load can be reduced because a recycled product can be used.

Polyalkylene Terephthalate Resin

The resin composition of the present embodiment contains a polyalkylene terephthalate resin.

The polyalkylene terephthalate resin is a polyester obtained by, for example, polycondensation of terephthalic acid as a dicarboxylic acid compound and a diol, and may be a homopolyester or a copolyester.

As the dicarboxylic acid compound constituting the polyalkylene terephthalate resin, a terephthalic acid compound or an ester-forming derivative thereof is preferably used.

Aromatic dicarboxylic acids besides terephthalic acid can be used in combination, and examples thereof include isophthalic acid, orthophthalic acid, 1,5-naphthalenedicarboxylic acid, 2,5-naphthalenedicarboxylic acid, 2,6-naphthalenedicarboxylic acid, biphenyl-2,2'-dicarboxylic acid, biphenyl-3,3'-dicarboxylic acid, biphenyl-4,4'-dicarboxylic acid, diphenyl ether-4,4'-dicarboxylic acid, diphenyl methane-4,4'-dicarboxylic acid, diphenyl sulfone-4,4'-dicarboxylic acid, diphenyl isopropylidene-4,4'-dicarboxylic acid, 1,2-bis(phenoxy)ethane-4,4'-dicarboxylic acid, anthracene-2,5-dicarboxylic acid, anthracene-2,6-dicarboxylic acid, p-tert-phenylene-4,4'-dicarboxylic acid, and pyridine-2,5-dicarboxylic acid. These can be used in the polycondensation reaction as free acids or as ester-forming derivatives thereof such as dimethyl ester.

Among the above, isophthalic acid or an ester-forming derivative thereof is particularly preferably used.

One or more aliphatic dicarboxylic acids such as adipic acid, azelaic acid, dodecanedioic acid, and sebacic acid, and alicyclic dicarboxylic acids such as 1,2-cyclohexanedicarboxylic acid, 1,3-cyclohexanedicarboxylic acid, and 1,4-cyclohexanedicarboxylic acid can be mixed and used in small amounts together with terephthalic acid and the above-mentioned aromatic dicarboxylic acids.

Examples of the dihydroxy compound constituting the polyalkylene terephthalate resin include aliphatic diols such as ethylene glycol, propylene glycol, butanediol, hexylene glycol, neopentyl glycol, 2-methylpropane-1,3-diol, diethylene glycol, and triethylene glycol, alicyclic diols such as cyclohexane-1,4-dimethanol, and mixtures thereof. Among these, butanediol and ethylene glycol are particularly preferable.

One or more long-chain diols having a molecular weight of from 400 to 6000, such as polyethylene glycol, poly-1,3-propylene glycol, and polytetramethylene glycol, may be copolymerized. In addition, aromatic diols such as hydroquinone, resorcinol, naphthalenediol, dihydroxydiphenyl ether, and 2,2-bis(4-hydroxyphenyl)propane can also be used.

In addition to bifunctional monomers like those described above, a small amount of a trifunctional monomer such as trimellitic acid, trimesic acid, pyromellitic acid, pentaerythritol, or trimethylolpropane may be used in combination to introduce a branched structure, or a small amount of a monofunctional compound such as a fatty acid for adjusting the molecular weight may be used in combination.

As the polyalkylene terephthalate resin, a resin mainly formed by polycondensation of terephthalic acid and a diol, that is, a resin in which the polycondensate accounts for greater than 50 mass%, preferably 70 mass% or more, more preferably 80 mass% or more, still more preferably 90 mass% or more, even more preferably 95 mass% or more, and yet even more preferably 99 mass% or more of the total amount of the resin is preferable. The diol is preferably an aliphatic diol, and the aliphatic diol is preferably 1,4-butanediol and/or ethylene glycol, and is more preferably 1,4-butanediol.

The amount of terminal carboxyl groups in the polyalkylene terephthalate resin (preferably a polybutylene terephthalate resin) may be appropriately selected and determined, but is usually 60 eq/ton or less, preferably 50 eq/ton or less, and more preferably 30 eq/ton or less. When the amount thereof is 60 eq/ton or less, the generation of gas during melt-molding of the resin composition tends to be more effectively suppressed. The lower limit value of the amount of terminal carboxyl groups is not particularly established, but is usually 3 eq/ton or more, preferably 5 eq/ton or more, and more preferably usually 10 eq/ton or more.

The amount of terminal carboxyl groups of the polyalkylene terephthalate resin is a value measured by dissolving 0.5 g of the resin in 25 mL of benzyl alcohol and titrating the solution with a 0.01 mol/L sodium hydroxide solution in benzyl alcohol. The amount of terminal carboxyl groups may be adjusted by any known method, such as a method of adjusting the polymerization conditions such as the ratio of raw materials charged during polymerization, the polymerization temperature, and the pressure reduction method, or a method of reacting with a capping agent.

The intrinsic viscosity of the polyalkylene terephthalate resin (preferably polybutylene terephthalate resin) is preferably 0.40 dL/g or greater, more preferably 0.50 dL/g or greater, even more preferably 0.55 dL/g or greater, still more preferably 0.60 dL/g or greater, yet even more preferably 0.65 dL/g or greater, and still more preferably 0.80 dL/g or greater, 1.00 dL/g or greater, 1.20 dL/g or greater, or 1.23 dL/g or greater. When the intrinsic viscosity is equal to or greater than the above lower limit value, a deterioration in physical properties such as strength tends to be effectively suppressed, and both impact resistance and nominal strain at break tend to be improved. The intrinsic viscosity of the polyalkylene terephthalate resin (preferably polybutylene terephthalate resin) is preferably 1.50 dL/g or less, more preferably 1.40 dL/g or less, even more preferably 1.35 dL/g or less, still more preferably 1.30 dL/g or less, and further preferably 1.2 dL/g or less, 0.86 dL/g or less, 0.80 dL/g or less, or 0.78 L/g or less. When the intrinsic viscosity is equal to or less than the above upper limit value, a decrease in fluidity of the resin during injection molding tends to be suppressed, and the peak pressure during injection

molding tends to be suppressed.

The intrinsic viscosity is measured by the following method.

Pellets of the polyalkylene terephthalate resin are dissolved in a mixed solvent of phenol/1, 1,2,2-tetrachloroethane (mass ratio of 1/1) at 110°C for 1 hour with stirring such that the concentration of the polyalkylene terephthalate resin becomes 1.00 g/dL. The mixture is then cooled to 30°C. The number of seconds for the sample solution to fall and the number of seconds for the solvent alone to fall are each measured at 30°C using a fully automatic solution viscometer, and the intrinsic viscosity is calculated from the following equation.

$$\text{Intrinsic viscosity} = ((1 + 4K_H\eta_{sp})^{0.5} - 1)/(2K_HC)$$

Here, $\eta_{sp} = \eta/\eta_0 - 1$, wherein $\eta$ is the number of seconds for the sample solution to fall, $\eta_0$ is the number of seconds for the solvent alone to fall, C is the concentration (g/dL) of the sample solution, and $K_H$ is the Huggins constant. A $K_H$ of 0.33 was used.

A fully automatic solution viscometer available from Shibayama Scientific Co., Ltd. is used.

In a case in which the resin composition of the present embodiment contains two or more polyalkylene terephthalate resins, the intrinsic viscosity of mixture is used.

The polyalkylene terephthalate resin is preferably a polyalkylene terephthalate resin in which 95 mol% or more of the acid component is terephthalic acid and 95 mol% or more of the alcohol component is an aliphatic diol, and typical examples thereof include a polybutylene terephthalate resin and a polyethylene terephthalate resin. These resins are preferably those close to homopolyesters, that is, those in which 95 mol% or more of the entire resin is composed of a terephthalic acid component and a 1,4-butanediol or ethylene glycol component.

The polyalkylene terephthalate resin is preferably a polybutylene terephthalate resin and/or a polyethylene terephthalate resin.

Among these, the polyalkylene terephthalate resin preferably contains a polybutylene terephthalate resin as a main component, more preferably contains a polybutylene terephthalate resin at an amount of 50 mass% or more in the polyalkylene terephthalate resin, and even more preferably contains a polybutylene terephthalate resin at an amount exceeding 50 mass% in the polyalkylene terephthalate resin. In this case, the content of the polyethylene terephthalate resin is preferably in a range of less than 50 mass%.

The polybutylene terephthalate resin can be produced by melt polymerizing, in a batchwise manner or a continuous manner, a dicarboxylic acid component containing terephthalic acid as a main component, or an ester derivative thereof, and a diol component containing 1,4-butanediol as a main component. Further, after the polybutylene terephthalate resin having a low molecular weight has been produced by melt polymerization, the degree of polymerization (or the molecular weight) can be increased to a desired value by further subjecting the polybutylene terephthalate resin to solid phase polymerization under a nitrogen stream or under reduced pressure.

The polybutylene terephthalate resin is preferably produced by a production method of continuous melt-polycondensation of a dicarboxylic acid component containing terephthalic acid as a main component, and a diol component containing 1,4-butanediol as a main component.

A catalyst used in carrying out the esterification reaction may be a known catalyst, and examples thereof include a titanium compound, a tin compound, a magnesium compound, and a calcium compound. Among these, a titanium compound is particularly preferred. Specific examples of the titanium compound as the esterification catalyst include titanium alcoholates such as tetramethyl titanate, tetraisopropyl titanate, and tetrabutyl titanate, and titanium phenolates such as tetraphenyl titanate.

The polybutylene terephthalate resin may be a polybutylene terephthalate resin modified by copolymerization (hereinafter, also referred to as a "modified polybutylene terephthalate resin"), and specific preferred copolymers thereof include a polyester ether resin obtained by copolymerizing polyalkylene glycols (particularly, polytetramethylene glycol), a dimer acid-copolymerized polybutylene terephthalate resin, and an isophthalic acid-copolymerized polybutylene terephthalate resin.

In a case in which a polyester ether resin obtained by copolymerizing polytetramethylene glycol is used as the modified polybutylene terephthalate resin, the proportion of the tetramethylene glycol component in the copolymer is preferably from 3 to 40 mass%, more preferably from 5 to 30 mass%, and still more preferably from 10 to 25 mass%.

In a case in which a dimer acid-copolymerized polybutylene terephthalate resin is used as the modified polybutylene terephthalate resin, the proportion of the dimer acid component in all the carboxylic acid components is, in terms of carboxylic acid groups, preferably from 0.5 to 30 mol%, more preferably from 1 to 20 mol%, and still more preferably from 3 to 15 mol%.

In a case in which an isophthalic acid-copolymerized polybutylene terephthalate resin is used as the modified polybutylene terephthalate resin, the proportion of the isophthalic acid component in all the carboxylic acid components is, in terms of carboxylic acid groups, preferably from 1 to 30 mol%, more preferably from 1 to 20 mol%, and still more

preferably from 3 to 15 mol%.

Among the modified polybutylene terephthalate resins, a polyester ether resin copolymerized with polytetramethylene glycol, and an isophthalic acid-copolymerized polybutylene terephthalate resin are preferred.

In the resin composition of the present embodiment, the content of the polyalkylene terephthalate resin (preferably polybutylene terephthalate resin) in 100 mass% of the resin composition is preferably 10 mass% or greater, more preferably 20 mass% or greater, and even more preferably 30 mass% or greater, and is preferably 60 mass% or less, and more preferably 50 mass% or less.

The resin composition of the present embodiment may contain only one type of polyalkylene terephthalate resin (preferably polybutylene terephthalate resin) or may contain two or more types of polyalkylene terephthalate resins. In a case in which two or more types are contained, the total amount thereof is preferably within the above range.

Furthermore, in the resin composition of the present embodiment, the polyalkylene terephthalate resin includes a polybutylene terephthalate resin at an amount of preferably 40 mass% or more, and more preferably 50 mass% or more, 55 mass% or more, 60 mass% or more, 70 mass% or more, 80 mass% or more, or 90 mass% or more, and particularly preferably 100 mass%.

Polycarbonate Resin

The resin composition of the present embodiment contains a polycarbonate resin.

The polycarbonate resin is a homopolymer or copolymer obtained by reacting a dihydroxy compound or a dihydroxy compound and a small amount of a polyhydroxy compound with phosgene or a carbonic acid diester. The method for producing the polycarbonate resin is not particularly limited, and a polycarbonate resin produced by a known phosgene method (interfacial polymerization method) or melting method (transesterification method) can be used. By using a polycarbonate resin obtained by the melting method, the polycarbonate resin tends to more easily have a branched structure. In addition, in the interfacial polymerization method, a polycarbonate resin having a branched structure can be obtained by using a branching agent at the time of polymerization of the polycarbonate resin.

The dihydroxy compound used as a raw material is preferably an aromatic dihydroxy compound, more preferably a bisphenol, and still more preferably bisphenol A. Further, a compound in which one or more tetraalkylphosphonium sulfonates are bonded to the aromatic dihydroxy compound described above may also be used.

In the present embodiment, preferably 90 mass% or more of the dihydroxy compound serving as a raw material monomer is a polycarbonate resin derived from bisphenol A, and more preferably 95 mass% or more is a polycarbonate resin derived from bisphenol A. The constituent units represented by Formulas (C1) to (C4) described later are also derived from bisphenol A, and are produced, for example, by causing a rearrangement reaction (Fries rearrangement) in a polymerization reaction system when a polycarbonate is polymerized by a transesterification reaction of bisphenol A and diphenyl carbonate (melting method). The constituent units represented by Formulas (C1) to (C4) described later are also generated by subjecting the polycarbonate resin derived from bisphenol A to photodegradation or the like by ultraviolet light or the like and a Fries rearrangement.

Two or more types of polycarbonate resins may be mixed and used.

To adjust the molecular weight of the polycarbonate resin, a monovalent aromatic hydroxy compound may be used, and examples thereof include m- and p-methylphenols, m- and p-propylphenols, p-tert-butylphenol, and p-long-chain alkyl-substituted phenols.

The polycarbonate resin used in the present embodiment includes a recycling-derived polycarbonate resin (recycled polycarbonate resin).

The recycled polycarbonate resin often contains bisphenol A due to the thermal history in previous processes, but by setting the content of bisphenol A to a range from 10 to 80 ppm by mass of the recycling-derived polycarbonate resin, flame retardancy comparable to that in a case of using a virgin polycarbonate resin or flame retardancy better than that in a case of using only a virgin polycarbonate resin can be achieved.

Examples of the recycled polycarbonate resin include those obtained by material recycling in which a recovered polycarbonate resin molded body that is used is pulverized, washed, and reused, and those obtained by chemical recycling (chemical decomposition method). A recycled polycarbonate resin obtained by material recycling is preferable.

Chemical recycling is a method in which a recovered polycarbonate resin molded body that is used is chemically decomposed and returned to the raw material level for resynthesizing the polycarbonate resin. On the other hand, in material recycling, for example, foreign substances are removed from a recovered polycarbonate resin molded body that is used, and the polycarbonate resin molded body is pulverized, washed with an alkali, dried, and then pulverized and formed into flakes or formed into pellets by an extruder.

A polycarbonate resin that is not a recycled polycarbonate resin is referred to as a virgin polycarbonate resin.

Examples of the recycled polycarbonate resin include a polycarbonate resin derived from a bottle, a polycarbonate resin derived from a disk, a polycarbonate resin derived from a sheet (a polycarbonate resin derived from a film), a polycarbonate resin derived from a meter cover (for example, a power meter cover), and a polycarbonate resin derived

from a headlamp lens, and at least one of the polycarbonate resin derived from a bottle, the polycarbonate resin derived from a meter cover, or the polycarbonate resin derived from a headlamp lens is preferable, and the recycled polycarbonate resin more preferably includes a polycarbonate resin derived from a bottle and/or a sheet.

Examples of the recycled polycarbonate resin include a post-consumer recycled (PCR) product obtained by recovering and recycling a product used in the market, and a post-industrial material recycled (PIR) product obtained by recycling a material generated in a product manufacturing process before the product is released to the market, and either of these PCR and PIR products may be used, but the post-consumer recycled product is preferable from the viewpoint of reducing the environmental load.

The recycling-derived polycarbonate resin used in the present embodiment preferably contains from 10 to 80 ppm by mass of bisphenol A. The content of bisphenol A in the recycling-derived polycarbonate resin is preferably 15 ppm by mass or greater, more preferably 20 ppm by mass or greater, and even more preferably 25 ppm by mass or greater, and is preferably 70 ppm by mass or less, more preferably 60 ppm by mass or less, even more preferably 55 ppm by mass or less, further preferably 50 ppm by mass or less, still further preferably 49 ppm by mass or less, yet further preferably 45 ppm by mass or less, particularly preferably 40 ppm by mass or less, and further preferably 35 ppm by mass or less, or 30 ppm by mass or less. When the content is equal to or greater than the above lower limit value, fluidity tends to be improved, and the availability of the recycled polycarbonate resin tends to increase. When the content is equal to or lower than the above upper limit value, the flame retardancy tends to be further improved, and the amount of gas generated tends to be reduced. In addition, also from the viewpoint of balance among availability, ease of production, and quality stability of the recycled polycarbonate resin, the content of bisphenol A is preferably within the range of the upper and lower limit values described above.

The content of bisphenol A in the recycled polycarbonate resin is measured according to the description in the Examples section below.

The recycling-derived polycarbonate resin used in the present embodiment has a branching amount of from 50 to 3500 ppm by mass. The branching amount of the recycling-derived polycarbonate resin is preferably 100 ppm by mass or greater, more preferably 200 ppm by mass or greater, even more preferably 500 ppm by mass or greater, further preferably 1000 ppm by mass or greater, still further preferably 1500 ppm by mass or greater, and yet even more preferably 2000 ppm by mass or greater, and is preferably 3000 ppm by mass or less, and more preferably 2500 ppm by mass or less. When the branching amount is equal to or greater than the above lower limit value, the dripping prevention effect during combustion tends to be further improved. When the branching amount is equal to or less than the above upper limit value, decomposition of the resin due to transesterification between the polyalkylene terephthalate resin and the polycarbonate resin tends to be suppressed, the crystallization temperature tends to be increased, the combustion time tends to be shortened, and the amount of gas generated tends to be reduced.

The branching amount of the recycled polycarbonate resin is measured according to the description in the Examples section below.

The recycled polycarbonate resin used in the present embodiment may contain one or more constituent units of any of Formulas (C1) to (C4).

[Chem. 1]

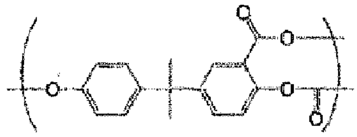

(C1)

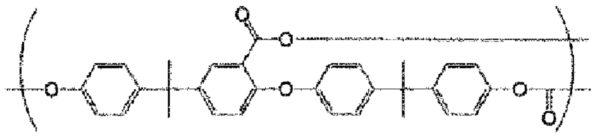

(C2)

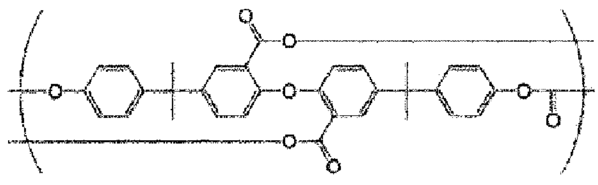

(C3)

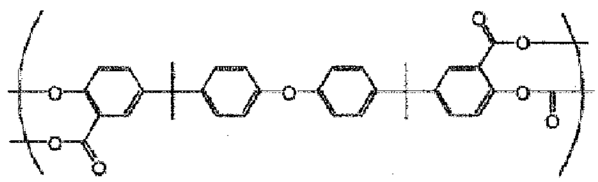

(C4)

The recycling-derived polycarbonate resin used in the present embodiment has a branching amount of from 50 to 3500 ppm by mass. The branching amount of the recycling-derived polycarbonate resin is preferably 100 ppm by mass or more, more preferably 200 ppm by mass or more, even more preferably 500 ppm by mass or more, further preferably 1000 ppm by mass or more, still further preferably 1500 ppm by mass or more, and yet even more preferably 2000 ppm by mass or more, and is preferably 3000 ppm by mass or less, and more preferably 2500 ppm by mass or less. When the branching amount is equal to or greater than the above lower limit value, the dripping prevention effect during combustion tends to be further improved. When the branching amount is equal to or less than the above upper limit value, decomposition of the resin due to transesterification between the polyalkylene terephthalate resin and the polycarbonate resin tends to be suppressed, the crystallization temperature tends to be increased, the combustion time tends to be shortened, and the amount of gas generated tends to be reduced.

The branching amount of the recycled polycarbonate resin is measured according to the description in the Examples section below.

When the recycled polycarbonate resin used in the present embodiment is hydrolyzed, the content of PSA relative to 100 parts by mass of the recycled polycarbonate is preferably 5 ppm by mass or greater, more preferably 30 ppm by mass or greater, even more preferably 50 ppm by mass or greater, still more preferably 100 ppm by mass or greater, and yet even more preferably 200 ppm by mass or greater, and is preferably 700 ppm by mass or less, more preferably 600 ppm by mass or less, even more preferably 500 ppm by mass or less, still more preferably 380 ppm by mass or less, and yet even more preferably 350 ppm by mass or less. When the content is equal to or greater than the above lower limit value, the dripping prevention effect during a combustion test tends to be further improved. When the content is equal to or less than the above upper limit value, decomposition of the resin due to transesterification between the polyalkylene terephthalate resin and the polycarbonate resin tends to be suppressed, the thermal stability tends to be excellent, the combustion time tends to be shortened, and the amount of gas generated tends to be reduced.

When the recycled polycarbonate resin used in the present embodiment is hydrolyzed, the content of PSA-Me relative to 100 parts by mass of the recycled polycarbonate is preferably 10 ppm by mass or greater, more preferably 50 ppm by mass or greater, even more preferably 150 ppm by mass or greater, still more preferably 300 ppm by mass or greater, and yet even more preferably 500 ppm by mass or greater, and is preferably 2000 ppm by mass or less, more preferably 1500 ppm by mass or less, even more preferably 1000 ppm by mass or less, still more preferably 900 ppm by mass or less, and yet even more preferably 800 ppm by mass or less. When the content is equal to or greater than the above lower limit value, the dripping prevention effect during a combustion test tends to be further improved. When the content is equal to or less than the above upper limit value, decomposition of the resin due to transesterification between the polyalkylene terephthalate resin and the polycarbonate resin tends to be suppressed, the thermal stability tends to be

excellent, the combustion time tends to be shortened, and the amount of gas generated tends to be reduced.

When the recycled polycarbonate resin used in the present embodiment is hydrolyzed, the content of PBA relative to 100 parts by mass of the recycled polycarbonate may be 0 parts by mass or greater, is preferably 0.01 ppm by mass or greater, more preferably 10 ppm by mass or greater, even more preferably 30 ppm by mass or greater, still more preferably 100 ppm by mass or greater, and yet even more preferably 400 ppm by mass or greater, and is preferably 2000 ppm by mass or less, more preferably 1500 ppm by mass or less, even more preferably 1000 ppm by mass or less, still more preferably 900 ppm by mass or less, and yet even more preferably 800 ppm by mass or less. When the content is equal to or greater than the above lower limit value, the dripping prevention effect during a combustion test tends to be further improved. When the content is equal to or less than the above upper limit value, decomposition of the resin due to transesterification between the polyalkylene terephthalate resin and the polycarbonate resin tends to be suppressed, the thermal stability tends to be excellent, the combustion time tends to be shortened, and the amount of gas generated tends to be reduced.

When the recycled polycarbonate resin used in the present embodiment is hydrolyzed, the content of dicarboxylic acids (two dicarboxylic acids DA1 and DA2 described later) relative to 100 parts by mass of the recycled polycarbonate is preferably 1 ppm by mass or greater, more preferably 10 ppm by mass or greater, even more preferably 100 ppm by mass or greater, still more preferably 200 ppm by mass or greater, and yet even more preferably 300 ppm by mass or greater, and is preferably 1500 ppm by mass or less, more preferably 1000 ppm by mass or less, even more preferably 900 ppm by mass or less, still more preferably 800 ppm by mass or less, and yet even more preferably 700 ppm by mass or less. When the content is equal to or greater than the above lower limit value, the dripping prevention effect during a combustion test tends to be further improved. When the content is equal to or less than the above upper limit value, decomposition of the resin due to transesterification between the polyalkylene terephthalate resin and the polycarbonate resin tends to be suppressed, the thermal stability tends to be excellent, the combustion time tends to be shortened, and the amount of gas generated tends to be reduced.

[Chem. 2]

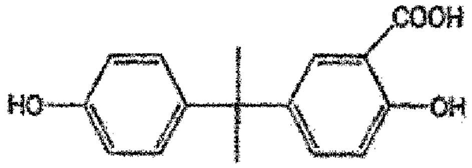

PSA

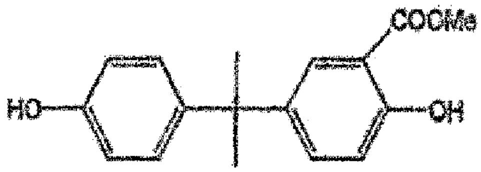

PSA-Me

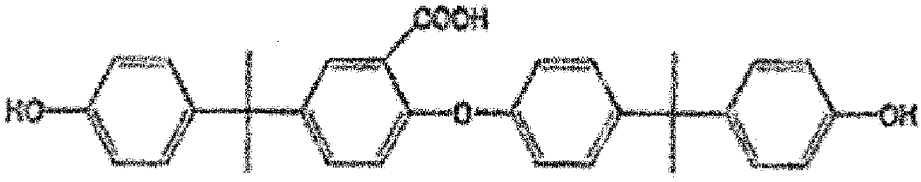

PBA

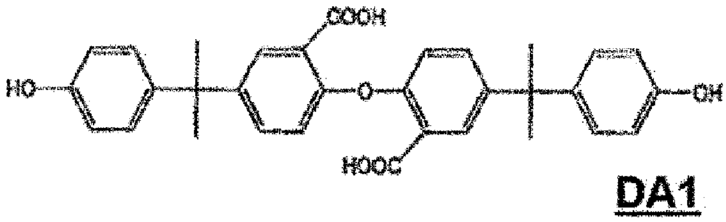

DA1

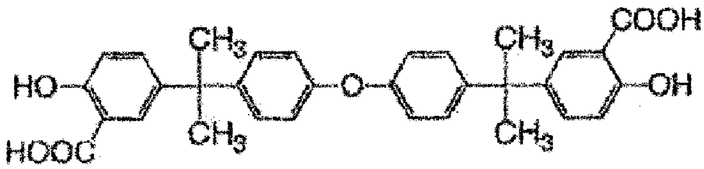

DA2

The contents of PSA, PSA-Me, PBA, and dicarboxylic acids (DA1, DA2) generated by hydrolysis of the recycled polycarbonate resin are measured according to the description in the Examples section below.

In the resin composition of the present embodiment, the melt volume rate (MVR) of the recycled polycarbonate resin as measured in accordance with ISO 1133 under conditions including a temperature of 300°C and a load of 1.20 kgf is preferably from 2 to 30 $cm^3$/10 minutes.

The MVR of the recycled polycarbonate resin is more preferably 3 $cm^3$/10 minutes or greater, even more preferably 4 $cm^3$/10 minutes or greater, still more preferably 5 $cm^3$/10 minutes or greater, and yet even more preferably 6 $cm^3$/10 minutes or greater, and is preferably 20 $cm^3$/10 minutes or less, more preferably 15 $cm^3$/10 minutes or less, even more preferably 11 $cm^3$/10 minutes or less, still more preferably 10 $cm^3$/10 minutes or less, yet even more preferably 9 $cm^3$/10 minutes or less, still even more preferably 8 $cm^3$/10 minutes or less, and particularly preferably 7 $cm^3$/10 minutes or less. When the MVR is equal to or greater than the above lower limit value, the fluidity tends to be improved. When the MVR is equal to or less than the above upper limit value, mechanical properties tend to be improved, and impact resistance tends to increase.

The resin composition of the present embodiment may contain only one type of recycled polycarbonate resin, or may contain two or more types of recycled polycarbonate resins. In a case in which two or more types of recycled polycarbonate resins are contained, the MVR of the mixture is preferably in the above range.

The degree of dispersion (Mw/Mn) of the recycled polycarbonate resin is preferably 2.6 or greater, and is preferably 3.5 or less, and more preferably 3.3 or less. The degree of dispersion of the recycled polycarbonate resin is

measured according to the description in the Examples section below.

A recycled polycarbonate resin undergoes a process of consumption and recycling of the resin, and therefore usually has a higher content of metal elements than a virgin product. However, even in a recycled polycarbonate resin, the content of metal elements may be low.

From the viewpoints of availability, ease of production, and quality stability of the recycled polycarbonate resin, the recycled polycarbonate resin used in the present embodiment preferably has an aluminum element content of from 0.2 to 1000 ppm by mass relative to 100 parts by mass of the recycled polycarbonate resin. Furthermore, the content of the aluminum element relative to 100 parts by mass of the recycled polycarbonate resin is preferably 0.3 ppm by mass or greater, more preferably 0.5 ppm by mass or greater, even more preferably 1 ppm by mass or greater, further preferably 2 ppm by mass or greater, still further preferably 5 ppm by mass or greater, yet even more preferably 7 ppm by mass or greater, and particularly preferably 8 ppm by mass or greater, and is more preferably 500 ppm by mass or less, further preferably 300 ppm by mass or less, even more preferably 100 ppm by mass or less, still more preferably 50 ppm by mass or less, yet even further preferably 30 ppm by mass or less, yet further preferably 15 ppm by mass or less, and particularly preferably 10 ppm by mass or less. When the content is equal to or greater than the above lower limit value, the laser marking property tends to be improved. When the content is equal to or less than the above upper limit value, the insulation properties such as the dielectric breakdown strength tend to be further improved, the tracking resistance tends to be enhanced, and the amount of gas generated tends to be reduced.

From the viewpoints of availability, ease of production, and quality stability of the recycled polycarbonate resin, in the present embodiment, the recycled polycarbonate resin preferably contains iron element at a proportion of from 0.2 to 100 ppm by mass relative to the amount of the polycarbonate resin. The content of the iron element relative to the recycled polycarbonate resin is more preferably 0.8 ppm by mass or greater, even more preferably 1 ppm by mass or greater, still more preferably 2 ppm by mass or greater, yet even more preferably 3 ppm by mass or greater, and even more preferably 4 ppm by mass or greater, and is more preferably 50 ppm by mass or less, even more preferably 35 ppm by mass or less, still more preferably 20 ppm by mass or less, yet more preferably 15 ppm by mass or less, still even more preferably 10 ppm by mass or less, and particularly preferably 8 ppm by mass or less. When the content is equal to or greater than the above lower limit value, the laser marking property tends to be improved. When the content is equal to or less than the above upper limit value, the insulation properties such as the dielectric breakdown strength tend to be further improved, the tracking resistance tends to be enhanced, and the amount of gas generated tends to be reduced.

From the viewpoints of availability, ease of production, and quality stability of the recycled polycarbonate resin, in the present embodiment, the recycled polycarbonate resin preferably contains phosphorus element at a proportion of from 1 to 200 ppm by mass relative to the polycarbonate resin. The content of the phosphorus element relative to the recycled polycarbonate resin is more preferably 2 ppm by mass or greater, even more preferably 3 ppm by mass or greater, still more preferably 4 ppm by mass or greater, and yet even more preferably 5 ppm by mass or greater, and is more preferably 150 ppm by mass or less, even more preferably 100 ppm by mass or less, still more preferably 50 ppm by mass or less, and yet even more preferably 10 ppm by mass or less. When the content is equal to or greater than the above lower limit value, transesterification of the mixture of the polyalkylene terephthalate resin and the recycled polycarbonate resin is suppressed, and the heat resistance of the resin tends to be improved. When the content is equal to or less than the above upper limit value, the insulation properties such as the dielectric breakdown strength tend to be further improved, the amount of gas generated tends to be reduced, and hydrolysis resistance tends to be improved.

The resin composition of the present embodiment may contain only a recycled polycarbonate resin as the polycarbonate resin, or may contain a virgin polycarbonate resin in addition to the recycled polycarbonate resin.

In the resin composition of the present embodiment, the content of the recycled polycarbonate resin in 100 parts by mass of the polycarbonate resin is preferably 50 parts by mass or greater, more preferably 60 parts by mass or greater, even more preferably 70 parts by mass or greater, further preferably 80 parts by mass or greater, and still further preferably 90 parts by mass or greater, and is 100 parts by mass or less. When the content is equal to or greater than the above lower limit value, recyclability is enhanced. When the content is equal to or less than the above upper limit value, production stability and quality stability tend to be further improved.

Blending Ratio of Polyalkylene Terephthalate Resin and Polycarbonate Resin

In the resin composition of the present embodiment, the mass ratio of the polyalkylene terephthalate resin (preferably polybutylene terephthalate resin) to the polycarbonate resin in 100 parts by mass of the total of the polyalkylene terephthalate resin and the polycarbonate resin is from 10/90 to 90/10, preferably from 80/20 to 20/80, and more preferably from 30/70 to 55/45. By setting such a blending ratio, a molded article excelling in various physical properties can be obtained, and the balance between chemical resistance and dimensional stability tends to be further improved.

The blending ratio is further set such that the proportion of the polyalkylene terephthalate resin in 100 parts by mass of the total of the polyalkylene terephthalate resin and the polycarbonate resin is preferably 20 parts by mass or greater, more preferably 30 parts by mass or greater, even more preferably 35 parts by mass or greater, further preferably

40 parts by mass or greater, still more preferably 45 parts by mass or greater, and depending on the application and the like, still more preferably 50 parts by mass or greater, even particularly preferably 60 parts by mass or greater, 70 parts by mass or greater, or 75 parts by mass or greater, and is preferably 85 parts by mass or less, and depending on the application and the like, may be 50 parts by mass or less, or may be 49 parts by mass or less.

The resin composition of the present embodiment may contain only one type of polyalkylene terephthalate resin and only one type of polycarbonate resin, or may contain two or more types of polyalkylene terephthalate resins and two or more types of polycarbonate resins. In a case in which two or more types are contained, the total amount thereof is preferably within the above range.

The total amount of the polyalkylene terephthalate resin (preferably polybutylene terephthalate resin) and the polycarbonate resin (preferably a recycled polycarbonate resin) in the resin composition of the present embodiment is preferably 10 mass% or greater, more preferably 20 mass% or greater, further preferably 30 mass% or greater, even more preferably 40 mass% or greater, and still more preferably 45 mass% or greater, and is preferably 90 mass% or less, more preferably 80 mass% or less, even more preferably 70 mass% or less, still more preferably 60 mass% or less, and yet even more preferably 55 mass% or less, in the resin composition. When the total amount is equal to or greater than the above lower limit value, the moldability tends to be improved, the nominal strain at break tends to be improved, and the impact resistance tends to increase. When the total amount is equal to or less than the above upper limit value, the appearance of the molded article tends to be improved, and the flame retardancy tends to be enhanced.

Flame Retardant

The resin composition of the present embodiment contains a flame retardant. By containing a flame retardant, the resin composition can achieve flame retardancy.

Examples of the flame retardant include halogen-based flame retardants, phosphorus-based flame retardants (such as a metal phosphinate and melamine polyphosphate), nitrogen-based flame retardants (such as melamine cyanurate), and metal hydroxides (such as magnesium hydroxide), but phosphorus-based flame retardants and halogen-based flame retardants are preferable, and halogen-based flame retardants are more preferable. As the phosphorus-based flame retardant, a metal phosphinate is more preferable. As the halogen-based flame retardant, a bromine-based flame retardant is more preferable.

The proportion of the bromine-based flame retardant in the flame retardant contained in the resin composition of the present embodiment is preferably 50 mass% or greater, more preferably 60 mass% or greater, further preferably 70 mass% or greater, even more preferably 80 mass% or greater, and still more preferably 90 mass% or greater, and is 100 mass% or less.

In a case in which a bromine-based flame retardant is used as the flame retardant, the type thereof is not particularly limited, but brominated phthalimides, brominated poly(meth)acrylates, brominated polycarbonates, brominated epoxy compounds, and brominated polystyrenes are preferable, brominated polycarbonates, brominated poly(meth)acrylates, and brominated epoxy compounds are more preferable, and brominated polycarbonates are still more preferable.

The brominated phthalimide is preferably represented by Formula (1).

[Chem. 3]

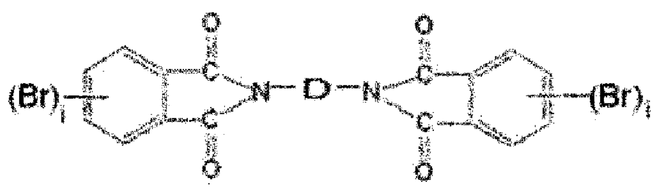

(1)

(In Formula (1), D represents a group formed of a combination of two or more of an alkylene group, an arylene group, $-S(=O)_2-$, -C(=O)-, and -O-, and i is an integer from 1 to 4.)

In Formula (1), D represents a group formed of a combination of two or more of an alkylene group, an arylene group, $-S(=O)_2-$, -C(=O)-, and -O-. D is preferably a group formed of a combination of an alkylene group or an arylene group and at least one of $-S(=O)_2-$, -C(=O)-, or -O-, is more preferably a group formed of a combination of an alkylene group or an arylene group and one of $-S(=O)_2-$, -C(=O)-, and -O-, and is even more preferably an alkylene group.

The group formed from a combination of an alkylene group and -O- is intended to include, for example, a combination of two alkylene groups and one -O- (the same applies to other combinations).

The alkylene group represented by D is preferably an alkylene group having from 1 to 6 carbons, and more preferably a methylene group, an ethylene group, a propylene group, or a butylene group. The arylene group is preferably

a phenylene group.

i is an integer from 1 to 4, and is preferably 4.

Examples of the brominated phthalimide represented by Formula (1) include N,N'-(bis-tetrabromophthalimido) ethane, N,N'-(bis-tetrabromophthalimido) propane, N,N'-(bis-tetrabromophthalimido) butane, N,N'-(bis-tetrabromophthalimido) diethyl ether, N,N'-(bis-tetrabromophthalimido) dipropyl ether, N,N'-(bis-tetrabromophthalimido) dibutyl ether, N,N'-(bis-tetrabromophthalimido) diphenyl sulfone, N,N'-(bis-tetrabromophthalimido) diphenyl ketone, and N,N'-(bis-tetrabromophthalimido) diphenyl ether.

As the brominated phthalimide, the brominated phthalimide represented by Formula (1) is preferably a brominated phthalimide represented by Formula (2).

[Chem. 4]

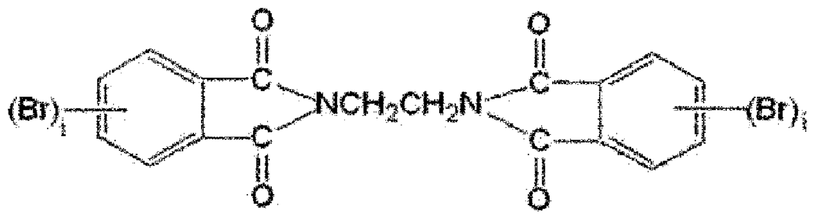

(2)

(In Formula (2), i is an integer from 1 to 4.)

i is an integer from 1 to 4, and is preferably 4.

The brominated poly(meth)acrylate is preferably a polymer obtained by polymerizing a bromine atom-containing benzyl (meth)acrylate alone, copolymerizing two or more types of bromine atom-containing benzyl (meth)acrylates, or copolymerizing a bromine atom-containing benzyl (meth)acrylate with another vinyl-based monomer. The bromine atom is added to a benzene ring, and the number of bromine atoms added per benzene ring is preferably from 1 to 5, and more preferably 4 or 5.

Examples of the bromine atom-containing benzyl acrylate include pentabromobenzyl acrylate, tetrabromobenzyl acrylate, tribromobenzyl acrylate, and mixtures thereof. Examples of the bromine atom-containing benzyl methacrylate include methacrylates corresponding to the above-mentioned acrylates.

Specific examples of the other vinyl-based monomers used for copolymerization with the bromine atom-containing benzyl (meth)acrylate include acrylic acid and acrylates such as methyl acrylate, ethyl acrylate, butyl acrylate, and benzyl acrylate; methacrylic acid and methacrylates such as methyl methacrylate, ethyl methacrylate, butyl methacrylate, and benzyl methacrylate; styrene, acrylonitrile, unsaturated carboxylic acids such as fumaric acid and maleic acid, or anhydrides thereof; vinyl acetate, and vinyl chloride.

Relative to the bromine atom-containing benzyl (meth)acrylate, these other vinyl-based monomers are usually used in an equimolar amount or less and preferably in a 0.5-fold molar amount or less.

Examples of the vinyl-based monomer that can be used include xylene diacrylate, xylene dimethacrylate, tetrabromoxylene diacrylate, tetrabromoxylene dimethacrylate, butadiene, isoprene, and divinylbenzene, and these monomers can usually be used at an amount of 0.5-fold molar amount or less of the bromine atom-containing benzyl acrylate or bromine atom-containing benzyl methacrylate.

The brominated poly(meth)acrylate is preferably a polymer obtained by polymerizing a bromine atom-containing (meth)acrylate monomer and particularly benzyl (meth)acrylate alone, copolymerizing two or more types of bromine atom-containing (meth)acrylate monomers, or copolymerizing a bromine atom-containing (meth)acrylate monomer with another vinyl-based monomer. The bromine atom is added to a benzene ring, and the number of bromine atoms added per benzene ring is preferably from 1 to 5, and more preferably 4 or 5.

As the brominated poly(meth)acrylate, a pentabromobenzyl poly(meth)acrylate is preferred because of the high bromine content.

The brominated poly(meth)acrylate may be of any molecular weight, and the molecular weight thereof may be appropriately selected and determined. The molecular weight of the brominated poly(meth)acrylate in terms of weight average molecular weight (Mw) is preferably 3000 or greater, more preferably 10000 or greater, still more preferably 15000 or greater, even more preferably 20000 or greater, and even more preferably 25000 or greater. When the molecular weight is equal to or greater than the above lower limit value, a molded article having higher mechanical strength tends to be obtained. Moreover, the upper limit of the weight average molecular weight (Mw) is preferably 100000 or less, more preferably 80000 or less, even more preferably 60000 or less, yet even more preferably 50000 or less, and still more preferably 35000 or less. When the weight average molecular weight (Mw) is equal to or less than the above upper limit value, the fluidity of the resin composition tends to be further improved.

The brominated polycarbonate preferably has a free bromine content of 0.05 mass% or greater, and preferably

0.20 mass% or less. When the content is within such a range, the heat resistance stability of the resin composition tends to be further improved. The brominated polycarbonate preferably has a chlorine atom content of 0.001 mass% or greater and 0.20 mass% or less. When the chlorine atom content is in such a range, the mold corrosion resistance during molding tends to be further improved.

Specifically, the brominated polycarbonate is preferably a brominated polycarbonate obtained from, for example, a brominated bisphenol A, and particularly tetrabromobisphenol A. Examples of a terminal structure thereof include a phenyl group, a 4-t-butylphenyl group, and a 2,4,6-tribromophenyl group, and a brominated polycarbonate having a 2,4,6-tribromophenyl group in the terminal group structure is particularly preferable.

The average number of carbonate constituent units in the brominated polycarbonate may be appropriately selected and determined, but is preferably from 2 to 30, more preferably from 3 to 15, and even more preferably from 3 to 10.

The brominated polycarbonate may be of any molecular weight and the molecular weight thereof may be appropriately selected and determined. The molecular weight thereof in terms of viscosity average molecular weight is preferably from 1000 to 20000, and more preferably from 2000 to 10000.

The brominated polycarbonate obtained from the brominated bisphenol A described above can be obtained by, for example, a common method of reacting a brominated bisphenol with phosgene. Examples of a capping agent include aromatic monohydroxy compounds, which may be substituted with a halogen or an organic group.

Specific examples of the brominated epoxy compound preferably include bisphenol A type brominated epoxy compounds typified by a tetrabromobisphenol A epoxy compound and a glycidyl brominated bisphenol A epoxy compound.

The brominated epoxy compound may be of any molecular weight, and the molecular weight thereof may be appropriately selected and determined. The molecular weight thereof in terms of weight average molecular weight (Mw) is preferably 3000 or greater, more preferably 10000 or greater, still more preferably 13000 or greater, even more preferably 15000 or greater, and still even more preferably 18000 or greater. When the molecular weight is equal to or greater than the above lower limit value, a molded article having higher mechanical strength tends to be obtained. Moreover, the upper limit of the weight average molecular weight (Mw) is preferably 100000 or less, more preferably 80000 or less, still more preferably 78000 or less, even more preferably 75000 or less, and further preferably 70000 or less, and may be 50000 or less, 30000 or less, or 25000 or less. When the weight average molecular weight (Mw) is equal to or less than the above upper limit value, the fluidity of the resin composition tends to be further improved.

The brominated epoxy compound preferably has an epoxy equivalent of from 3000 to 40000 g/eq, more preferably from 4000 to 35000 g/eq, and particularly preferably from 10000 to 30000 g/eq.

In addition, a brominated epoxy oligomer may be used in combination as the brominated epoxy compound. In this case, for example, the flame retardancy, mold releasability, and fluidity can be appropriately adjusted by using an oligomer having a Mw of 5000 or less at a proportion of about 50 mass% or less. The bromine atom content in the brominated epoxy compound is optional, but in order to impart sufficient flame retardancy, the bromine atom content is usually 10 mass% or greater, preferably 20 mass% or greater, and particularly preferably 30 mass% or greater, and the upper limit thereof is preferably 60 mass%, and within that range, is more preferably 55 mass% or less.

The brominated polystyrene is preferably a brominated polystyrene containing a constituent unit represented by Formula (3).

[Chem. 5]

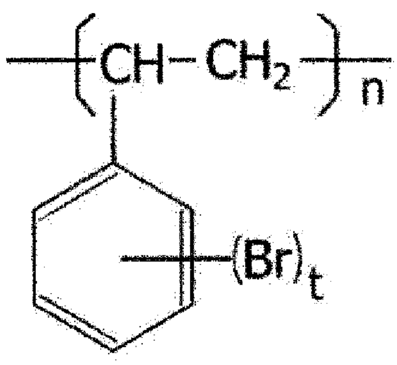

(3)

(In Formula (3), t is an integer from 1 to 5, and n is the number of constituent units.)

The brominated polystyrene may be produced by brominating polystyrene or by polymerizing a brominated styrene monomer, but a brominated polystyrene obtained by polymerizing brominated styrene is preferable because the

amount of free bromine (atoms) is small. In Formula (3), the CH group to which the brominated benzene is bonded may be substituted with a methyl group. Moreover, the brominated polystyrene may be a copolymer obtained by copolymerizing a brominated styrene monomer with another vinyl-based monomer. Examples of the vinyl-based monomer in this case include styrene, α-methylstyrene, (meth)acrylonitrile, methyl (meth)acrylate, butadiene, and vinyl acetate. The brominated polystyrene used may be a single substance or a mixture of two or more types having different structures, and may contain units derived from styrene monomers having different quantities of bromine in a single molecular chain.

Specific examples of the brominated polystyrene include poly(4-bromostyrene), poly(2-bromostyrene), poly(3-bromostyrene), poly(2,4-dibromostyrene), poly(2,6-dibromostyrene), poly(2,5-dibromostyrene), poly(3,5-dibromostyrene), poly(2,4,6-tribromostyrene), poly(2,4,5-tribromostyrene), poly(2,3,5-tribromostyrene), poly(4-bromo-α-methylstyrene), poly(2,4-dibromo-α-methylstyrene), poly(2,5-dibromo-α-methylstyrene), poly(2,4,6-tribromo-α-methylstyrene), and poly(2,4,5-tribromo-α-methylstyrene). Poly(2,4,6-tribromostyrene), poly(2,4,5-tribromostyrene), and polydibromostyrene and polytribromostyrene containing an average of 2 to 3 bromine groups in the benzene ring are particularly preferably used.

The brominated polystyrene preferably has a number n of the constituent units in Formula (3) (average degree of polymerization) of from 30 to 1500, more preferably from 150 to 1000, and particularly preferably from 300 to 800. When the average degree of polymerization is less than 30, blooming is likely to occur, whereas when the average degree of polymerization exceeds 1500, poor dispersion is likely to occur and mechanical properties are likely to deteriorate. The weight average molecular weight (Mw) of the brominated polystyrene is preferably from 5000 to 500000, more preferably from 10000 to 500000, even more preferably from 10000 to 300000, yet even more preferably from 10000 to 100000, and still more preferably from 10000 to 70000. In particular, in the case of the brominated product of polystyrene described above, the weight average molecular weight (Mw) is preferably from 50000 to 70000, and in the case of the brominated polystyrene obtained by a polymerization method, the weight average molecular weight (Mw) is preferably from about 10000 to about 30000.

The bromine concentration (the Br content in the examples described later) in the bromine-based flame retardant is preferably 45 mass% or greater, more preferably 48 mass% or greater, and even more preferably 50 mass% or greater. When the bromine concentration is equal to or greater than the above lower limit value, the flame retardancy of the molded article tends to be effectively improved. The upper limit value of the bromine concentration is preferably 75 mass% or less, more preferably 73 mass% or less, and still more preferably 71 mass% or less, and may be 65 mass% or less.

When a metal phosphinate is used as the flame retardant, the type thereof is not particularly limited, but the metal phosphinate preferably has an anion moiety represented by Formula (4) or (5) and a cation moiety containing a metal ion of any of calcium, magnesium, aluminum, or zinc.

[Chem. 6]

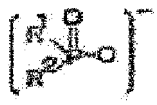 (4)

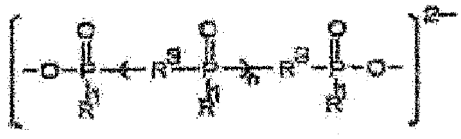 (5)

(where $R^1$ and $R^2$ each independently represent an alkyl group having from 1 to 6 carbons or an aryl group optionally having a substituent, the multiple $R^1$ may be the same or different, $R^3$ represents an alkylene group having from 2 to 10 carbons, an arylene group optionally having a substituent, or a group formed by a combination thereof, the multiple $R^3$ may be the same or different, and n represents an integer from 0 to 2.)

The aryl group optionally having a substituent is preferably a phenyl group optionally having a substituent. In a case of an aryl group having a substituent, the substituent is preferably an alkyl group having from 1 to 3 carbons. Further, it is also preferable that the aryl group is unsubstituted.

The arylene group optionally having a substituent is preferably a phenylene group optionally having a substituent. The arylene group optionally having a substituent is preferably unsubstituted or has an alkyl group having from 1 to 3 carbons (preferably a methyl group) as a substituent.

In the present embodiment, a metal phosphinate represented by Formula (5) is preferable. In the present embodiment, aluminum phosphinate is preferable.

Specific examples of the metal phosphinate include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane di(methylphosphinate), magnesium methane di(methylphosphinate), aluminum methane bis(methylphosphinate), zinc methane bis(methylphosphinate), calcium benzene-1,4-bis(methylphosphinate), magnesium benzene-1,4-bis(methylphosphinate), aluminum benzene-1,4-bis(methylphosphinate), zinc benzene-1,4-bis(methylphosphinate), calcium methyl phenylphosphinate, magnesium methyl phenylphosphinate, aluminum methyl phenylphosphinate, zinc methyl phenylphosphinate, calcium diphenylphosphinate, magnesium diphenylphosphinate, aluminum diphenylphosphinate, and zinc diphenylphosphinate.

For details on the metal phosphinate, reference can be made to the description in paragraphs [0052] to [0058] of WO 2010/010669 A1, the content of which is incorporated herein by reference.

Relative to the total of 100 parts by mass of the polyalkylene terephthalate resin and the polycarbonate resin, the content of the flame retardant (preferably a bromine-based flame retardant) in the resin composition of the present embodiment has a lower limit value of 5 parts by mass or greater, preferably 7 parts by mass or greater, more preferably 8 parts by mass or greater, further preferably 10 parts by mass or greater, even more preferably 11 parts by mass or greater, still more preferably 13 parts by mass or greater, yet even more preferably 14 parts by mass or greater, and particularly preferably 15 parts by mass or greater. When the content of the flame retardant is equal to or greater than the above lower limit value, the flame retardancy of the obtained molded article tends to be further improved. Relative to the total of 100 parts by mass of the polyalkylene terephthalate resin and the polycarbonate resin, the upper limit value of the content of the flame retardant is 50 parts by mass or less, preferably 45 parts by mass or less, more preferably 40 parts by mass or less, further preferably 35 parts by mass or less, even more preferably 30 parts by mass or less, still more preferably 25 parts by mass or less, yet even more preferably 20 parts by mass or less, and particularly preferably 15 parts by mass or less. When the content of the flame retardant is equal to or less than the above upper limit value, a decrease in the mechanical strength of the obtained molded article can be more effectively suppressed.

The resin composition of the present embodiment may contain only one type of flame retardant or two or more types of flame retardants. In a case in which two or more types are contained, the total amount thereof is preferably within the above range.

Elastomer

The resin composition of the present embodiment preferably contains an elastomer. When an elastomer is contained, the impact resistance of the obtained molded article tends to be further improved.

The type of elastomer is not particularly limited, and a known elastomer can be used.

An example of the elastomer is an epoxy group-containing elastomer. When the resin composition contains an epoxy group-containing elastomer, affinity with the polybutylene terephthalate resin tends to be increased, and a molded article having high impact resistance tends to be obtained.

A first embodiment of the epoxy group-containing elastomer is a copolymer obtained by copolymerizing an α-olefin, a glycidyl ester of an α,β-unsaturated acid, and optionally an unsaturated monomer that is copolymerizable therewith. The α-olefin and the glycidyl ester of the α,β-unsaturated acid are preferably used at an amount of 60 mass% or greater of the total copolymer components in the copolymer.

Examples of the α-olefin include ethylene, propylene, butene-1, and pentene-1. Two or more types of these α-olefins may be used. Examples of the glycidyl ester of an α,β-unsaturated acid include glycidyl acrylate, glycidyl methacrylate, glycidyl ethacrylate, and glycidyl itaconate. Two or more types of these glycidyl esters of an α,β-unsaturated acid may be used. Examples of a vinyl-based monomer copolymerizable with the above components include vinyl ethers, vinyl esters such as vinyl acetate and vinyl propionate, acrylates and methacrylates of methyl, ethyl, propyl, and butyl, acrylonitrile, and styrene. Two or more types of these vinyl-based monomers may be used.

Preferred examples of the epoxy group-containing elastomer of the first embodiment include an ethylene/glycidyl methacrylate copolymer, an ethylene/glycidyl methacrylate/vinyl acetate copolymer, an ethylene/glycidyl methacrylate/alkyl acrylate copolymer, and an ethylene/alkyl acrylate/vinyl acetate copolymer. In particular, from the viewpoints of excelling in toughness and further improving the moisture and heat resistance and the impact resistance of the molded article, an ethylene/glycidyl methacrylate/alkyl acrylate (preferably butyl acrylate) copolymer is preferred. As specific examples of the epoxy group-containing elastomer of the first embodiment, elastomers of the commercially available products of "Lotader" (trade name) AX8900 and AX8700 available from Arkema S.A can be procured.

A second embodiment of the epoxy group-containing elastomer is a core/shell type elastomer. The molecular particle size of the core/shell type elastomer is small, and thus when used, the core/shell type elastomer is easily dispersed in the polybutylene terephthalate resin, and the welding strength tends to increase due to the reaction of the reactive groups. Examples of the core/shell type elastomer include those obtained by graft-copolymerizing a monomer component to a core polymer.

The core is preferably a rubber-like polymer, and examples thereof include an acrylonitrile-acrylic rubber-like polymer-styrene graft copolymer (ASA resin), a methyl methacrylate-acrylic rubber-like polymer-styrene graft copolymer

(MSA resin), a methyl methacrylate-acrylonitrile-acrylic rubber-like polymer-styrene graft copolymer (MASA resin), and a polyorganosiloxane-containing rubber-like polymer, and a polyorganosiloxane-containing rubber-like polymer is preferable.

The polyorganosiloxane-containing rubber-like polymer has a glass transition temperature of usually 0°C or lower, preferably -20°C or lower, and more preferably -30°C or lower. Specific examples of the rubber component are not particularly limited as long as a polyorganosiloxane rubber is contained, and examples thereof include a polyorganosiloxane rubber and a composite rubber (IPN type) of a polyorganosiloxane rubber and a poly(alkyl acrylate) rubber.

Specific examples of the monomer component that is graft-copolymerizable with the core include aromatic vinyl compounds; vinyl cyanide compounds; (meth)acrylate compounds; (meth)acrylic acid compounds; epoxy group-containing (meth)acrylate compounds such as glycidyl (meth)acrylate; maleimide compounds, such as maleimide, N-methylmaleimide, and N-phenylmaleimide; $\alpha$,$\beta$-unsaturated carboxylic acid compounds, such as maleic acid, phthalic acid, and itaconic acid, and anhydrides thereof (for example, maleic anhydride).

For specific examples of the rubber-like polymers, aromatic vinyl compounds, vinyl cyanide compounds, and (meth)acrylate compounds, reference can be made to the description in paragraphs [0042] to [0046] of JP 2019-059813 A, the contents of which are incorporated herein by reference.

The epoxy group-containing elastomer of the second embodiment is preferably a compound obtained by graft-polymerizing an epoxy group-containing (meth)acrylate compound to a polyorganosiloxane-containing rubber-like polymer (preferably a composite rubber of a polyorganosiloxane rubber and a poly(alkyl acrylate) rubber).

Specific examples of the epoxy group-containing elastomer of the second embodiment include "METABLEN (trade name, same hereinafter) S-2002" and "METABLEN S-2200" available from Mitsubishi Rayon Co., Ltd.

Other examples of the elastomer include graft copolymers obtained by graft-copolymerizing a rubber component with a monomer component copolymerizable therewith. The method for producing the graft copolymer may be any production method such as bulk polymerization, solution polymerization, suspension polymerization, and emulsion polymerization, and the scheme of the copolymerization may be single-stage grafting or multistage grafting.

The rubber component has a glass transition temperature of usually 0°C or lower, preferably -20°C or lower, and more preferably -30°C or lower. Specific examples of the rubber component include polybutadiene rubber; polyisoprene rubber; poly(alkyl acrylate) rubbers such as poly(butyl acrylate), poly(2-ethylhexyl acrylate), and a butyl acrylate-2-ethylhexyl acrylate copolymer; silicone-based rubbers, such as a polyorganosiloxane rubber; a butadiene-acrylic composite rubber; an interpenetrating polymer network (IPN) type composite rubber composed of a polyorganosiloxane rubber and a poly(alkyl acrylate) rubber; a styrene-butadiene rubber; ethylene-$\alpha$-olefin-based rubbers, such as an ethylene-propylene rubber, an ethylene-butene rubber, and an ethylene-octene rubber; an ethylene-acrylic rubber; and a fluorine rubber. These rubber components may be used alone, or two or more types may be mixed and used. Among these, from the viewpoints of mechanical properties and surface appearance, a polybutadiene rubber, a poly(alkyl acrylate) rubber, a polyorganosiloxane rubber, an IPN type composite rubber composed of a polyorganosiloxane rubber and a poly(alkyl acrylate) rubber, and a styrene-butadiene rubber are preferable.

Specific examples of the monomer component that is graft-copolymerizable with the rubber component are the same as the specific examples of the monomer component that is graft-copolymerizable with the above-described rubber component of the epoxy group-containing elastomer.

The graft copolymer obtained by copolymerizing the rubber component is preferably a core/shell type graft copolymer from the viewpoint of impact resistance and surface appearance. Among these, a core/shell type graft copolymer is particularly preferable which includes, as a core layer, at least one rubber component selected from a polybutadiene-containing rubber, a polybutyl acrylate-containing rubber, a polyorganosiloxane rubber, and an IPN type composite rubber composed of a polyorganosiloxane rubber and a poly(alkyl acrylate) rubber, and a shell layer formed by copolymerizing a (meth)acrylate around the core layer. The core/shell type graft copolymer preferably contains the rubber component at an amount of 40 mass% or greater, and more preferably 60 mass% or greater. Moreover, the content of (meth)acrylic acid is preferably 10 mass% or greater. In the present embodiment, the term core/shell type does not necessarily mean that the core layer and the shell layer can be clearly distinguished from each other, and is intended to broadly include compounds obtained by graft-polymerizing a rubber component around a portion serving as a core.

Preferred specific examples of the core/shell type graft copolymer include a methyl methacrylate-butadiene-styrene copolymer (MBS), a methyl methacrylate-acrylonitrile-butadiene-styrene copolymer (MABS), a methyl methacrylate-butadiene copolymer (MB), a methyl methacrylate-acrylic rubber copolymer (MA), a methyl methacrylate-acrylic rubber-styrene copolymer (MAS), a methyl methacrylate-acrylic-butadiene rubber copolymer, a methyl methacrylate-acrylic-butadiene rubber-styrene copolymer, and a methyl methacrylate-(acrylic-silicone IPN rubber) copolymer. One type of such rubber-like polymers may be used alone, or two or more types may be used in combination.

Examples of such elastomers include "Paraloid (trade name, same hereinafter) EXL2602", "Paraloid EXL2603", "Paraloid EXL2655", "Paraloid EXL2311", "Paraloid EXL2313", "Paraloid EXL2315", "Paraloid KM330", "Paraloid KM336P", and "Paraloid KCZ201" available from Rohm and Haas Japan Co., Ltd.; "Metablen (trade name, same hereinafter) C-223A", "Metablen E-901", "Metablen S-2001", and "Metablen SRK-200" available from Mitsubishi Rayon

Co., Ltd.; "KaneAce (trade name, same hereinafter) M-511", "KaneAce M-600", "KaneAce M-400", "KaneAce M-580", "KaneAce M-711", and "KaneAce MR-01" available from Kaneka Corporation; and "UBESTA XPA" available from Ube Corporation.

Another example of the elastomer is an acrylic block copolymer.

Examples of the acrylic block copolymer include a block copolymer having a hard segment composed of a methyl methacrylate block and a soft segment composed of an alkyl acrylate block.

The acrylic block copolymer is preferably a triblock copolymer having two blocks constituting the hard segment on both sides of one block constituting the soft segment, or a diblock copolymer having one block constituting the soft segment and one block constituting the hard segment. That is, the acrylic block copolymer in the present embodiment preferably has a triblock structure composed of a methyl methacrylate block - alkyl acrylate block - methyl methacrylate block, or a diblock structure composed of a methyl methacrylate block - alkyl acrylate block.

Examples of the alkyl acrylate constituting the soft segment include one or a combination of two or more of n-propyl acrylate, isopropyl acrylate, n-butyl acrylate, isobutyl acrylate, tert-butyl acrylate, n-pentyl acrylate, n-hexyl acrylate, cyclohexyl acrylate, n-heptyl acrylate, n-octyl acrylate, 2-ethylhexyl acrylate, nonyl acrylate, decyl acrylate, dodecyl acrylate, phenyl acrylate, toluyl acrylate, benzyl acrylate, isobornyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-aminoethyl acrylate, γ-(acryloyloxypropyl) trimethoxysilane, γ-(acryloyloxypropyl) dimethoxymethylsilane, an ethylene oxide adduct of acrylic acid, methyl trifluoromethyl acrylate, ethyl 2-trifluoromethyl acrylate, 2-perfluoroethyl ethyl acrylate, 2-perfluoroethyl-2-perfluorobutyl ethyl acrylate, 2-perfluoroethyl acrylate, perfluoromethyl acrylate, diperfluoromethyl methyl acrylate, 2-perfluoromethyl-2-perfluoroethyl methyl acrylate, 2-perfluorohexyl ethyl acrylate, 2-perfluorodecyl ethyl acrylate, 2-perfluorohexadecyl ethyl acrylate, and the like, and among these, butyl acrylate or butyl acrylate/2-ethylhexyl acrylate is preferable.

The acrylic block copolymer is not particularly limited as long as the effects of the present invention can be exhibited, but among the above, the acrylic block copolymer preferably has a diblock structure composed of a methyl methacrylate block - butyl acrylate block or a methyl methacrylate block - butyl acrylate/2-ethylhexyl acrylate block, or a triblock structure composed of a methyl methacrylate block - butyl acrylate block - methyl methacrylate block or a methyl methacrylate block - butyl acrylate/2-ethylhexyl acrylate block - methyl methacrylate block.

In the acrylic block copolymer, the ratio of the hard segment to the soft segment on a mass basis is preferably in a range of from 3:97 to 40:60, and more preferably from 5:95 to 35:65. As the proportion of the soft segment increases, a vinyl chloride-based resin can be further softened, but when the proportion of the hard segment is too small, the miscibility with the vinyl chloride-based resin decreases as described above, and thus the moldability deteriorates. On the other hand, as the proportion of the soft segment decreases, the efficiency of softening the vinyl chloride-based resin decreases.

Examples of commercially available products of the acrylic block copolymer include LA1892, LA4285, LA2270, LA2250, LA2140, LA2330, and LA3320 of the LA series of Kurarity (trade name) available from Kuraray Co., Ltd., and M51, M52, and M22 of the Nanostrength (trade name) series available from Arkema S.A. Moreover, acrylic copolymers that contain butyl acrylate/2-ethylhexyl acrylate as the soft segment are commercially available as LK9243, KL-LK9333, and the like, which are products of the LK series of Kurarity (trade name) available from Kuraray Co., Ltd.

The melt mass flow rate (MFR) of the elastomer used in the present embodiment as measured in accordance with ISO 1133 under conditions including a temperature of 190°C and a load of 2.16 kgf is preferably 1 g/10 minutes or greater, and more preferably 2 g/10 minutes or greater, and is preferably 15 g/10 minutes or less, and more preferably 10 g/10 minutes or less.

In a case in which the resin composition of the present embodiment contains two or more types of elastomers, the MFR of the elastomers is a weighted average value.

In addition to the above, as the elastomer, an elastomer described in paragraphs [0075] to [0088] of JP 2012-251061 A, an elastomer described in paragraphs [0101] to [0107] of JP 2012-177047 A, an elastomer described in paragraphs [0076] to [0087] of JP 2016-98242 A, an elastomer described in paragraphs [0080] to [0087] of JP 2019-11514 A, and the like can be used, and the contents thereof are incorporated in the present specification.

In the present embodiment, an epoxy group-containing elastomer (preferably the epoxy group-containing elastomer of the first embodiment) and an acrylic block copolymer are preferably used in combination. Using these in combination tends to improve the fluidity and impact resistance in a well-balanced manner.

In a case in which the resin composition of the present embodiment contains an elastomer, the elastomer content relative to the total of 100 parts by mass of the polyalkylene terephthalate resin and the polycarbonate resin is preferably 1 part by mass or greater, more preferably 3 parts by mass or greater, even more preferably 5 parts by mass or greater, still more preferably 7 parts by mass or greater, yet even more preferably 8 parts by mass or greater, and still even more preferably 9 parts by mass or greater, and is preferably 30 parts by mass or less, more preferably 25 parts by mass or less, even more preferably 20 parts by mass or less, still more preferably 20 parts by mass or less, and yet even more preferably 15 parts by mass or less, and may be 12 parts by mass or less or 10 parts by mass or less. When the elastomer content is equal to or greater than the above lower limit value, the impact resistance tends to be further improved. When the content is

equal to or less than the above upper limit value, the fluidity tends to be improved, and a high level of flame retardancy tends to be easily exhibited.

The resin composition of the present embodiment may contain only one type of elastomer or may contain two or more types of elastomers. In a case in which two or more types are contained, the total amount thereof is preferably within the above range.

Flame Retardant Aid

The resin composition of the present embodiment may contain a flame retardant aid. When the resin composition contains the flame retardant aid, the flame retardancy of the molded article can be further improved. The flame retardant aid is particularly preferably used when a halogen-based flame retardant is contained. Examples of the flame retardant aid used in the present embodiment include antimony compounds, such as antimony trioxide ($Sb_2O_3$), antimony tetroxide ($Sb_2O_4$), antimony pentoxide ($Sb_2O_5$), and sodium antimonate. In particular, an antimony oxide and particularly antimony trioxide are preferable from the viewpoint of impact resistance.

When a flame retardant aid is blended, it may be blended as a masterbatch. The content of the antimony compound in the masterbatch is preferably from 30 to 90 mass%, more preferably from 40 to 85 mass%, even more preferably from 50 to 85 mass%, still more preferably from 60 to 85 mass%, and yet even more preferably from 70 to 85 mass%. The resin used in the masterbatch is preferably a polyester resin and is more preferably a polybutylene terephthalate resin.

In a case in which the resin composition of the present embodiment contains a flame retardant aid (for example, an antimony compound), the content thereof relative to the total of 100 parts by mass of the polyalkylene terephthalate resin and the polycarbonate resin is preferably 0.1 parts by mass or greater, more preferably 1 part by mass or greater, still more preferably 2 parts by mass or greater, even more preferably 3 parts by mass or greater, and yet even more preferably 5 parts by mass or greater. When the content of the flame retardant aid is equal to or greater than the above lower limit value, flame retardancy tends to be more effectively exhibited. Meanwhile, relative to the total of 100 parts by mass of the polyalkylene terephthalate resin and the polycarbonate resin, the upper limit value of the content of the antimony compound is preferably 20 parts by mass or less, more preferably 15 parts by mass or less, further preferably 10 parts by mass or less, even more preferably 8 parts by mass or less, and still more preferably 5 parts by mass or less. When the content is equal to or less than the above upper limit value, the mold releasability and impact resistance of the obtained molded article tend to be improved.

The resin composition of the present embodiment may contain only one type of flame retardant aid or two or more types of flame retardant aids. In a case in which two or more types are contained, the total amount thereof is preferably within the above range.

Dripping Inhibitor

The resin composition of the present embodiment may contain a dripping inhibitor. The dripping inhibitor is preferably a polytetrafluoroethylene (PTFE), and is preferably one that has a fibril-forming ability, is easily dispersed in the resin composition, and tends to form a fibrous network structure in the resin. Examples of PTFE having a tendency to have a fibril-forming ability in the resin composition of the present embodiment include a suspension polymerization product. Moreover, from the viewpoint of reducing the environmental load, a perfluorooctanoic acid (PFOA)-reduced product or a PFOA-free product is preferably used as the PTFE.

Relative to the total of 100 parts by mass of the polyalkylene terephthalate resin and the polycarbonate resin, the content proportion of the dripping inhibitor is preferably from 0.1 to 20 parts by mass, more preferably 0.2 parts by mass or greater, even more preferably 0.3 parts by mass or greater, and still more preferably 0.4 parts by mass or greater, and is more preferably 10 parts by mass or less, even more preferably 5 parts by mass or less, and still more preferably 1 part by mass or less. When the content proportion of the dripping inhibitor is equal to or greater than the above lower limit value, dripping during combustion tends to be suppressed, impact resistance tends to be improved, and flame retardancy tends to be more sufficiently exhibited. When the content proportion thereof is equal to or less than the above upper limit value, the appearance of the molded article and fluidity tend to be improved. The content proportion of the dripping inhibitor is more preferably from 0.5 to 10 parts by mass relative to the total of 100 parts by mass of the polyalkylene terephthalate resin and the polycarbonate resin.

The resin composition of the present embodiment may contain only one type of dripping inhibitor or two or more types of dripping inhibitors. In a case in which two or more types are contained, the total amount thereof is preferably within the above range.

Transesterification Inhibitor

The resin composition of the present embodiment may contain a transesterification inhibitor. By containing the transesterification inhibitor, a resin composition or a molded article having excellent thermal stability is obtained.

A phosphate and/or phosphoric acid is preferable as an example of the transesterification inhibitor. Examples of the phosphate include zinc phosphate, a phosphate of a Group 1 or Group 2 metal, and a metal salt of an organic phosphate. Examples of the phosphoric acid include organic phosphates, which are preferable because the amount of gas generated tends to be reduced, the appearance of the molded article tends to be improved, the crystallization temperature tends to be increased, and the mold releasability tends to be improved.

In the present embodiment, the phosphate preferably contains at least one of compounds represented by Formula (P1) or compounds represented by Formula (P2).

Formula (P1) Formula (P2)

[Chem. 7]

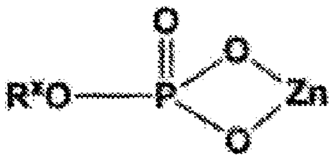

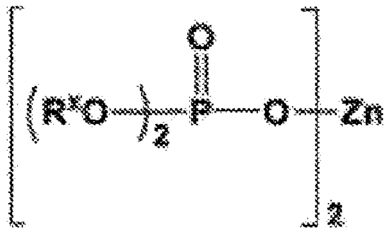

(In Formula (P1) and Formula (P2), each $R^x$ independently represents a linear or branched alkyl group having from 3 to 30 carbons.)

The number of carbons in $R^x$ is preferably 8 or more, more preferably 13 or more, and still more preferably 15 or more, and is preferably 25 or less, more preferably 20 or less, even more preferably 18 or less, and most preferably 18.

$R^x$ is a linear or branched alkyl group, and is preferably a linear alkyl group.

In the present embodiment, the phosphate more preferably contains at least one of a compound represented by Formula (P1-1) or a compound represented by Formula (P2-1). In the present embodiment, a mixture of the compound represented by Formula (P1-1) and the compound represented by Formula (P2-1) is more preferable.

Formula (P1-1) Formula (P2-1)

[Chem. 8]

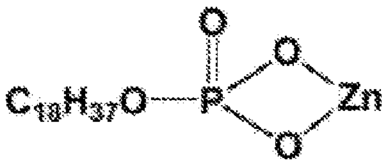

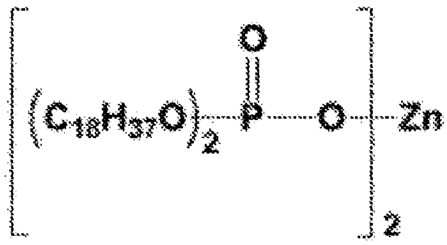

The resin composition preferably contains at least one compound represented by Formula (P3) as the phosphoric acid.

Formula (P3)

[Chem. 9]

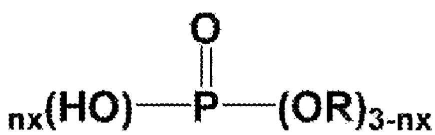

(In Formula (P3), R represents a linear or branched alkyl group having from 2 to 18 carbons, and nx represents 1 or 2.)

The number of carbons in R is preferably 8 or more, more preferably 13 or more, and still more preferably 15 or more, and is preferably 25 or less, more preferably 20 or less, even more preferably 18 or less, and most preferably 18.

R is a linear or branched alkyl group, but is preferably a linear alkyl group.

nx is 1 or 2, and a mixture of 1 and 2 is preferred.

A commercially available product of the transesterification inhibitor may be used, and examples thereof include AX-71 available from ADEKA Corporation, and JP-518Zn available from Johoku Chemical Co., Ltd.

Relative to the total of 100 parts by mass of the polyalkylene terephthalate resin and the polycarbonate resin, the content of the transesterification inhibitor in the resin composition of the present embodiment is preferably 0.01 parts by mass or greater, more preferably 0.05 parts by mass or greater, and even more preferably 0.1 parts by mass or greater, and is preferably 2 parts by mass or less, more preferably 1.5 parts by mass or less, even more preferably 1 part by mass or less, and still more preferably 0.8 parts by mass or less, and may be 0.5 parts by mass or less. When the content is equal to or greater than the above lower limit value, the effect of suppressing thermal deterioration or oxidative deterioration of the resin during melt-kneading, during molding, and furthermore during use as a molded body tends to be further improved, discoloration of the resin tends to be more effectively suppressed, flame retardancy tends to be improved, the crystallization temperature tends to be increased, and the appearance of the molded article tends to be improved. When the content is equal to or less than the above upper limit value, adverse effects on the appearance and physical properties due to problems such as aggregation of additives such as a stabilizer tend to be effectively suppressed.

The resin composition of the present embodiment may contain only one type of transesterification inhibitor or two or more types of transesterification inhibitors. In a case in which two or more types are contained, the total amount thereof is preferably within the above range.

Non-Fibrous Inorganic Filler

The resin composition of the present embodiment preferably contains a non-fibrous inorganic filler. When the resin composition contains a non-fibrous inorganic filler, the physical properties and heat resistance are improved, and the effect of reducing anisotropy of shrinkage during molding is improved.

The term non-fibrous inorganic filler means a filler having a shape other than fibrous, and a plate-shaped filler or a particulate filler is preferable.

Examples of the non-fibrous inorganic filler include calcium carbonate, talc, mica, silica, kaolin, wollastonite, barium sulfate, zirconium silicate, clay, bentonite, hydrotalcite, calcium sulfate, barium carbonate, magnesium carbonate, magnesium sulfate, calcium silicate, alumina, glass beads, glass flakes, titanium oxide, zinc oxide, magnesium oxide, calcium titanate, magnesium titanate, and barium titanate. Preferable examples include calcium carbonate, talc, mica, silica, kaolin, barium sulfate, zirconium silicate, and titanium oxide, and more preferable examples include calcium carbonate, talc, and titanium oxide. Moreover, titanium oxide tends to improve impact resistance, flame retardancy, and tracking resistance and thus is still more preferable.

In addition, the surface of the non-fibrous inorganic filler used in the present embodiment is preferably subjected to an acid treatment, a treatment with a siloxane-based compound, or a treatment with an inorganic compound or the like. In particular, in the case of titanium oxide, the surface is preferably treated with an organosiloxane-based compound or an inorganic compound such as alumina or silica from the viewpoint of thermal stability.

Examples of the acid used in the acid treatment include fatty acids, rosin acids, and lignin acids, and saturated or unsaturated fatty acids having from 6 to 20 carbons are preferable. Examples of the saturated or unsaturated fatty acids having from 6 to 20 carbons include stearic acid, palmitic acid, lauric acid, oleic acid, and linoleic acid.

The average particle size of the non-fibrous inorganic filler used in the present embodiment is preferably 5 μm or less, more preferably 3 μm or less, still more preferably 1 μm or less, even more preferably 0.8 μm or less, yet even more preferably 0.5 μm or less, and particularly preferably 0.3 μm or less. The lower limit value of the average particle size is preferably 0.01 μm or greater, more preferably 0.08 μm or greater, even more preferably 0.10 μm or greater, and still more preferably 0.15 μm or greater. The average particle size in the present embodiment is obtained by averaging particle diameters that can be observed from an enlarged image obtained using a scanning electron microscope. In the case of surface-treated titanium oxide, the primary particle diameter of the titanium oxide after the surface treatment is defined as the average particle size.

The content of the non-fibrous inorganic filler relative to the total of 100 parts by mass of the polyalkylene terephthalate resin and the polycarbonate resin is preferably 1 part by mass or greater, more preferably 2 parts by mass or greater, further preferably 3 parts by mass or greater, and particularly preferably 3.5 parts by mass or greater. When the content is equal to or greater than the above lower limit value, the impact resistance, flame retardancy, and tracking resistance tend to be improved. The upper limit value of the content of the non-fibrous inorganic filler relative to the total of 100 parts by mass of the total of the polyalkylene terephthalate resin and the polycarbonate resin is preferably 12 parts by mass or less, more preferably 10 parts by mass or less, still more preferably 8 parts by mass or less, even more preferably 6

parts by mass or less, and further preferably 5 parts by mass or less. When the content is equal to or less than the above upper limit value, the surface appearance of the molded article tends to be improved.

**In** the resin composition of the present embodiment, the content of the non-fibrous inorganic filler accounts for preferably 0.5 mass% or more, more preferably 1.0 mass% or more, still more preferably 2.0 mass% or more, and even more preferably 2.5 mass% or more, of the resin composition. When the content is equal to or greater than the above lower limit value, the impact resistance, flame retardancy, and tracking resistance tend to be improved. The content of the non-fibrous inorganic filler in the resin composition of the present embodiment accounts for preferably 50 mass% or less, more preferably 40 mass% or less, still more preferably 30 mass% or less, even more preferably 20 mass% or less, yet even more preferably 10 mass% or less, still further preferably 7 mass% or less, and particularly preferably 5 mass% or less, of the resin composition. When the content is equal to or less than the above upper limit value, the surface appearance of the molded article tends to be more favorable, and the fluidity tends to be improved.

The resin composition of the present embodiment may contain only one type of non-fibrous inorganic filler or two or more types of non-fibrous inorganic fillers. **In** a case in which two or more types are contained, the total amount thereof is preferably within the above range.

In particular, when the resin composition contains a rutile-type titanium oxide having an average particle size of from 0.15 to 0.4 μm with the content thereof being in a range of from 0.5 to 10 parts by mass relative to the total of 100 parts by mass of the polyalkylene terephthalate resin and the polycarbonate resin, high flame retardancy, tracking resistance, and impact resistance tend to be effectively exhibited, and thus containing such a rutile-type titanium oxide is preferable.

The resin composition of the present embodiment may or may not further contain a fibrous filler. Preferably, the resin composition of the present embodiment is substantially free of a fibrous filler. The phrase "substantially free of" means that the content of a fibrous filler contained in the resin composition of the present embodiment is less than 5 mass% of the resin composition, preferably less than 3 mass%, more preferably less than 1 mass%, and still more preferably less than 0.1 mass%.

Antioxidant

The resin composition of the present embodiment may contain an antioxidant. By containing an antioxidant, a resin composition or a molded article having excellent thermal stability is obtained.

The antioxidant preferably contains one or more compounds selected from the group consisting of thioether-based compounds, hindered phenol-based compounds, and phosphite-based compounds, and more preferably contains a hindered phenol-based compound.

In the present embodiment, it is also preferable to use, in combination, two or more types of compounds selected from among thioether-based compounds, hindered phenol-based compounds, and phosphite-based compounds. By using two or more antioxidants in combination in this manner, the thermal stability is further improved and tends to continue for a long period of time.

As the thioether-based compound, any known sulfur atom-containing compound can be used, and among these, thioethers are preferred. When the resin composition of the present embodiment contains a thioether-based compound, the appearance of the molded article tends to be favorable, and changes in color tone tend to be suppressed. Specific examples of the thioether-based compound include didodecyl thiodipropionate, ditetradecyl thiodipropionate, dioctadecyl thiodipropionate, pentaerythritol tetrakis(3-dodecylthiopropionate), 2,2-bis{[3-(dodecylthio)-1-oxopropoxy] methyl} propane-1,3-diyl bis[3-(dodecylthio) propionate], thiobis(N-phenyl-β-naphthylamine), 2-mercaptobenzothiazole, 2-mercaptobenzimidazole, tetramethylthiuram monosulfide, tetramethylthiuram disulfide, nickel dibutyl dithiocarbamate, nickel isopropyl xanthate, and trilauryl trithiophosphite. Among these, 2,2-bis{[3-(dodecylthio)-1-oxopropoxy] methyl} propane-1,3-diyl bis[3-(dodecylthio) propionate] is preferable. Examples of commercially available products thereof include "Seenox 412S" (trade name) available from Shipro Kasei Kaisha, Ltd., and "ADK STAB AO-412S" (trade name) available from ADEKA Corporation.

Examples of the hindered phenol-based compound include pentaerythritol tetrakis(3-(3,5-di-t-butyl-4-hydroxyphenyl) propionate), octadecyl-3-(3,5-di-tert-butyl-4-hydroxyphenyl) propionate, thiodiethylene bis(3-(3, 5-di-tert-butyl-4-hydroxyphenyl) propionate), pentaerythritol tetrakis(3-(3,5-di-neopentyl-4-hydroxyphenyl) propionate), and 1,3,5-trimethyl-2,4,6-tris(3,5-di-tert-butyl-4-hydroxybenzyl) benzene. Among these, pentaerythritol tetrakis(3-(3,5-di-tert-butyl-4-hydroxyphenyl)propionate) and octadecyl-3-(3,5-di-tert-butyl-4-hydroxyphenyl)propionate are preferable. Examples of commercially available products thereof include "ADK STAB AO-60" and "ADK STAB AO-330" (trade name) available from ADEKA Corporation.

Preferable examples of the phosphite compound include compounds represented by the following formula:

$$R^2O\text{-}P(OR^3)(OR^4)$$

(wherein, $R^2$, $R^3$, and $R^4$ each represent a hydrogen atom, an alkyl group having from 1 to 30 carbons, or an aryl group

having from 6 to 30 carbons, and at least one of $R^2$, $R^3$, and $R^4$ is an aryl group having from 6 to 30 carbons).

Examples of the phosphite compound include triphenyl phosphite, tris(nonylphenyl) phosphite, dilauryl hydrogen phosphite, triethyl phosphite, tridecyl phosphite, tris(2-ethylhexyl) phosphite, tris(tridecyl) phosphite, tristearyl phosphite, diphenyl monodecyl phosphite, monophenyl didecyl phosphite, diphenyl mono (tridecyl) phosphite, tetraphenyl dipropylene glycol diphosphite, tetraphenyl tetra(tridecyl) pentaerythritol tetraphosphite, a hydrogenated bisphenol A phenol phosphite polymer, diphenyl hydrogen phosphite, 4,4'-butylidene-bis(3-methyl-6-tert-butylphenyl di(tridecyl) phosphite), tetra(tridecyl) 4,4'-isopropylidene diphenyl diphosphite, bis(tridecyl) pentaerythritol diphosphite, bis(nonylphenyl) pentaerythritol diphosphite, dilauryl pentaerythritol diphosphite, distearyl pentaerythritol diphosphite, tris(4-tert-butylphenyl) phosphite, tris(2,4-di-tert-butylphenyl) phosphite, a hydrogenated bisphenol A pentaerythritol phosphite polymer, bis (2,4-di-tert-butylphenyl) pentaerythritol diphosphite, bis(2,6-di-tert-butyl-4-methylphenyl) pentaerythritol diphosphite, 2,2'-methylene bis(4,6-di-tert-butylphenyl) octyl phosphite, and bis(2, 4-dicumylphenyl) pentaerythritol diphosphite. Among these, bis(2,6-di-tert-butyl-4-methylphenyl) pentaerythritol diphosphite is preferable. Examples of commercially available products thereof include "ADK STAB PEP-36" (trade name) available from ADEKA Corporation.

In addition, with regard to details of the antioxidant, reference can be made specifically to the description in paragraphs [0067] to [0075] of JP 2021-063196 A, the description in paragraphs [0046] to [0057] of JP 2018-070722 A, the description in paragraphs [0030] to [0037] of JP 2019-056035 A, and the description in paragraphs [0066] to [0078] of WO 2017/038949 A1, the contents of which are incorporated herein by reference.

The content of the antioxidant in the resin composition of the present embodiment relative to the total of 100 parts by mass of the polyalkylene terephthalate resin and the polycarbonate resin is 0.01 parts by mass or greater, preferably 0.05 parts by mass or greater, more preferably 0.1 parts by mass or greater, and even more preferably 0.3 parts by mass or greater. When the content is equal to or greater than the above lower limit value, the effect of suppressing thermal deterioration or oxidative deterioration of the resin during melt-kneading, during molding, and furthermore during use as a molded body tends to be further improved, and discoloration of the resin tends to be more effectively suppressed. The upper limit value of the content of the antioxidant relative to the total of 100 parts by mass of the polyalkylene terephthalate resin and the polycarbonate resin is preferably 2.0 parts by mass or less, more preferably 1.5 parts by mass or less, and still more preferably 1.0 parts by mass or less. When the content is equal to or less than the above upper limit value, adverse effects on the appearance and physical properties due to problems such as aggregation of additives such as the antioxidant can be effectively suppressed.

The resin composition of the present embodiment may contain only one type of antioxidant or two or more types of antioxidants. In a case in which two or more types are contained, the total amount thereof is preferably within the above range.

Reinforcing Filler

The resin composition of the present embodiment may contain a reinforcing filler. The mechanical strength of an obtained shaped object can be improved by containing a reinforcing filler.

Examples of the shape of the reinforcing filler include a scale-like shape, spherical, a needle-like shape, and a fibrous shape, and a fibrous reinforcing filler (reinforcing fiber) is preferable. Examples of the component of the reinforcing filler include glass, metal oxides, metal hydroxides, carbonates, and sulfates, and glass is preferable.

As the reinforcing fibers, carbon fibers and glass fibers are preferable, and the resin composition more preferably contains glass fibers.

Next, the glass fiber preferably used in the present embodiment will be described.

As the glass fiber, a fiber obtained by melt-spinning a commonly supplied glass such as E glass, C glass, D glass, R glass, A glass, S glass, and alkali-resistant glass is used, but the glass material is not particularly limited, and any glass can be used as long as it can be formed into a glass fiber. In the present embodiment, E glass is preferably included.

The glass fiber used in the present embodiment is preferably surface-treated with a known silane coupling agent such as epoxy silane, amino silane, or vinyl silane, or with phosphoric acid or the like. The attachment amount of the surface treatment agent is preferably from 0.01 to 1 mass% of the glass fiber. Further, if necessary, glass fibers that are surface-treated with a lubricant such as a fatty acid amide compound or silicone oil, an antistatic agent such as a quaternary ammonium salt, a resin having a film-forming ability such as an epoxy resin or a urethane resin, or a mixture of a resin having a film-forming ability and a thermal antioxidant may be used.

As the glass fibers, a commercially available product can be procured. Examples of commercially available products include T-187, T-187H, T-127, T-127H, T-286H, T-756H, and T-289H available from Nippon Electric Glass Co., Ltd., DEFT2A available from Owens Corning, HP3540 available from PPG Industries, Inc., and CSG3PA820 available from Nitto Boseki Co., Ltd.

In a case in which the resin composition of the present embodiment contains a reinforcing filler (preferably glass fibers), the content of the reinforcing filler relative to the total of 100 parts by mass of the polyalkylene terephthalate resin

and the polycarbonate resin is preferably 20 parts by mass or greater, more preferably 30 parts by mass or greater, even more preferably 40 parts by mass or greater, and still even more preferably 50 parts by mass or greater, and is preferably 150 parts by mass or less, more preferably 125 parts by mass or less, and even more preferably 100 parts by mass or less, and may be 75 parts by mass or less.

When the resin composition of the present embodiment contains a reinforcing filler, the reinforcing filler (preferably glass fibers) preferably accounts for an amount from 10 to 45 mass%, and more preferably from 15 to 40 mass% of the resin composition, and may account for an amount from 20 to 35 mass% of the resin composition.

The resin composition of the present embodiment may contain only one type of reinforcing filler or two or more types of reinforcing fillers. In a case in which two or more types are contained, the total amount thereof is preferably within the above range.

Colorant

The resin composition of the present embodiment may further contain a colorant. The colorant may be a pigment or a dye, but from the viewpoint of flame retardancy, a pigment is preferable, and carbon black is more preferable.

For details on the carbon black, reference can be made to the description in paragraph [0021] of JP 2011-57977 A, the content of which is incorporated herein by reference.

In addition, in a case in which a colorant such as carbon black is blended in the resin composition of the present embodiment, preferably, a masterbatch is formed, after which the masterbatch is kneaded with the polyalkylene terephthalate resin or the like. In the masterbatch, a polyester resin is preferably used, a polyalkylene terephthalate resin is more preferably used, a polyethylene terephthalate resin and/or a polybutylene terephthalate resin is even more preferably used, and a polybutylene terephthalate resin is further preferably used. Use of the polybutylene terephthalate resin promotes crystallization of the resin composition. In particular, when the polybutylene terephthalate resin is present at a position close to a colorant such as carbon black, the crystallization promoting effect is more effectively exhibited.

The proportion of the colorant in the masterbatch is preferably 5 mass% or greater, and more preferably 10 mass% or greater, and is preferably 50 mass% or less, and more preferably 40 mass% or less.

In a case in which the resin composition of the present embodiment contains a colorant (preferably carbon black), the content thereof relative to the total of 100 parts by mass of the polyalkylene terephthalate resin and the polycarbonate resin is preferably 0.1 parts by mass or greater, more preferably 0.2 parts by mass or greater, even more preferably 0.4 parts by mass or greater, and still more preferably 0.6 parts by mass or greater, and is preferably 3 parts by mass or less, more preferably 2 parts by mass or less, and even more preferably 1 part by mass.

The resin composition of the present embodiment may contain only one type of colorant (preferably carbon black) or two or more types of colorants. In a case in which two or more types are contained, the total amount thereof is preferably within the above range.

Ultraviolet Absorber

The resin composition of the present embodiment may contain an ultraviolet absorber.

Preferable examples of the ultraviolet absorber include a benzotriazole-based ultraviolet absorber, a benzoxazine-based ultraviolet absorber, a triazine-based ultraviolet absorber, and a malonate-based ultraviolet absorber, and a benzotriazole-based ultraviolet absorber is more preferable. By selecting an organic ultraviolet absorber, the transparency and mechanical properties of the resin composition of the present embodiment become more favorable.

Examples of benzotriazole-based ultraviolet absorber include 2-(2-hydroxy-5-methylphenyl)-2H-benzotriazole, 2-(2-hydroxy-3,5-di-tert-butylphenyl)-2H benzotriazole, 2-(2-hydroxy-3-tert-butyl-5-methylphenyl)-2H-benzotriazole, 2-(2-hydroxy-5-tert-octylphenyl)-2H-benzotriazole, 2-(3,5-di-tert-octyl-2-hydroxyphenyl)-2H-benzotriazole, 2-(3,5-di-tert-amyl-2-hydroxyphenyl)-2H-benzotriazole, 2-(3-lauryl-5-methyl-2-hydroxyphenyl)-2H-benzotriazole, 2-(3,5-di-tert-butyl-2-hydroxyphenyl)-5-chloro-2H-benzotriazole, 2-(3-tert-butyl-5-methyl-2-hydroxyphenyl)-5-chloro-2H-benzotriazole, 2-(3,5-bis(1-methyl-1-phenylethyl)-2-hydroxyphenyl)-2H-benzotriazole, bis(3-(2H-benzotriazol-2-yl)-2-hydroxy-5-methylphenyl)methane, bis(3-(2H-benzotriazol-2-yl)-2-hydroxy-5-(1,1,3,3-tetramethylbutyl)phenyl)methane, bis(3-(2H-benzotriazol-2-yl)-2-hydroxy-5-cumylphenyl)methane, bis(3-(2H-benzotriazol-2-yl)-2-hydroxy-5-octylphenyl)methane, 1,1-bis(3-(2H-benzotriazol-2-yl)-2-hydroxy-5-methylphenyl)octane, 1,1-bis(3-(2H-5-chlorobenzotriazol-2-yl)-2-hydroxy-5-methylphenyl)octane, 1,2-ethanediyl bis(3-(2H-benzotriazol-2-yl)-2-hydroxybenzoate), 1,12-dodecanediyl bis(3-(2H-benzotriazol-2-yl)-4-hydroxybenzoate), 1,3-cyclohexanediyl bis(3-(5-chloro-2H-benzotriazol-2-yl)-2-hydroxybenzoate), 1,4-butanediyl bis(3-(2H-benzotriazol-2-yl)-4-hydroxy-5-methylphenylethanoate), 3,6-dioxa-1,8-octanediyl-bis(3-(5-methoxy-2H-benzotriazol-2-yl)-4-hydroxyphenylethanoate), 1,6-hexanediyl bis(3-(3-(2H-benzotriazol-2-yl)-4-hydroxy-5-tert-butylphenyl)propionate), p-xylenediyl bis(3-(3-(2H-benzotriazol-2-yl)-4-hydroxyphenyl)propionate), bis(3-(2H-benzotriazol-2-yl)-4-hydroxy toluyl)malonate, bis(2-(3-(2H-benzotriazol-2-yl)-4-hydroxy-5-octylphenyl)ethyl) terephthalate, bis(3-(2H-benzotriazol-2-yl)-4-hydroxy-5-propyl toluyl)octadioate, 2-(2H-benzotriazol-2-yl)-6-phthalimidomethyl-4-methylphenol, 2-(2H-benzotriazol-2-yl)-6-phthalimidoethyl-4-methylphenol, 2-(2H-benzotriazol-2-yl)-6-phthalimido-octyl-4-methylphenol, 2-(2H-benzotriazol-2-yl)-6-phthalimidomethyl-4-tert-butylphenol, 2-(2H-benzotriazol-2-yl)-6-phthalimidomethyl-4-cumylphenol, and 2-(2H-benzotriazol-2-yl)-4,6-bis(phthalimidomethyl)phenol. Among these, 2-(2-hydroxy-5-tert-octylphenyl)-2H-benzotriazole is preferable.

With regard to the ultraviolet absorber, reference can be made to the description in paragraphs [0059] to [0062] of JP 2016-216534 A and the description in paragraphs [0069] to [0082] of JP 2018-178019 A, the contents of which are incorporated herein by reference.

In the resin composition of the present embodiment, the content of the ultraviolet absorber is preferably from 0.01 to 1 part by mass relative to the total of 100 parts by mass of the polyalkylene terephthalate resin and the polycarbonate resin. The content of the ultraviolet absorber is more preferably from 0.03 to 0.7 parts by mass, and still more preferably from 0.05 to 0.5 parts by mass, relative to the total of 100 parts by mass of the polyalkylene terephthalate resin and the polycarbonate resin. By adding an ultraviolet absorber in such a range, good weather resistance can be imparted to the resin composition of the present embodiment.

The resin composition of the present embodiment may contain only one type of ultraviolet absorber or two or more types thereof. In a case in which two or more types are contained, the total amount thereof is preferably in the range described above.

Release Agent

The resin composition of the present embodiment preferably contains a release agent.

As the release agent, a known release agent can be widely used, and examples thereof include aliphatic carboxylic acid amide-based release agents, aliphatic carboxylic acids, esters of aliphatic carboxylic acids and alcohols, aliphatic hydrocarbon compounds having a number average molecular weight of from 200 to 15000, and polysiloxane-based silicone oils.

Examples of the aliphatic carboxylic acid amide-based release agent include compounds obtained by a dehydration reaction of a higher aliphatic monocarboxylic acid and/or a polybasic acid with a diamine.

As the higher aliphatic monocarboxylic acid, saturated aliphatic monocarboxylic acids hydroxycarboxylic acids having 16 or more carbons are preferable, and examples thereof include palmitic acid, stearic acid, behenic acid, montanic acid, and 12-hydroxystearic acid.

Examples of the polybasic acid include aliphatic dicarboxylic acids such as malonic acid, succinic acid, adipic acid, sebacic acid, pimelic acid, and azelaic acid, aromatic dicarboxylic acids such as phthalic acid and terephthalic acid, and alicyclic dicarboxylic acids such as cyclohexane dicarboxylic acid and cyclohexyl succinic acid.

Examples of the diamine include ethylenediamine, 1,3-diaminopropane, 1,4-diaminobutane, hexamethylenediamine, meta-xylylenediamine, tolylene diamine, para-xylylenediamine, phenylene diamine, and isophorone diamine.

As the carboxylic acid amide-based compound, a compound obtained by polycondensation of stearic acid, sebacic acid, and ethylenediamine is preferable, and a compound obtained by polycondensation of 2 moles of stearic acid, 1 mole of sebacic acid, and 2 moles of ethylenediamine is more preferable. In addition, bis-amide-based compounds obtained by reacting a diamine such as N,N'-methylenebis(stearamide) or N,N'-ethylenebis(stearamide) with an aliphatic carboxylic acid, and dicarboxylic acid amide compounds such as N,N'-dioctadecyl terephthalamide may also be suitably used.

Examples of the aliphatic carboxylic acid include saturated or unsaturated aliphatic monovalent, divalent, or trivalent carboxylic acids. Here, the term aliphatic carboxylic acid includes alicyclic carboxylic acids. Among these, the aliphatic carboxylic acid is preferably a monovalent or divalent carboxylic acid having from 6 to 36 carbons, and is more preferably an aliphatic saturated monovalent carboxylic acid having from 6 to 36 carbons. Specific examples of such aliphatic carboxylic acids include palmitic acid, stearic acid, caproic acid, capric acid, lauric acid, arachidic acid, behenic acid, lignoceric acid, cerotic acid, melissic acid, tetratriacontanoic acid, montanic acid, adipic acid, and azelaic acid.

As the aliphatic carboxylic acid in the ester of an aliphatic carboxylic acid and an alcohol, for example, the same aliphatic carboxylic acid as the aliphatic carboxylic acid can be used. Meanwhile, examples of the alcohol include saturated or unsaturated monohydric or polyhydric alcohols. These alcohols may have a substituent such as a fluorine atom or an aryl group. Among these, a monohydric or polyhydric saturated alcohol having 30 or fewer carbons is preferable, and an aliphatic or alicyclic saturated monohydric alcohol having 30 or fewer carbons or an aliphatic saturated polyhydric alcohol having 30 or fewer carbons is more preferable.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol.

Specific examples of the ester of an aliphatic carboxylic acid and an alcohol include beeswax (a mixture containing myricyl palmitate as a main component), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and esters of montanic acid and a polyfunctional alcohol.

Examples of the aliphatic hydrocarbon having a number average molecular weight of from 200 to 15000 include liquid paraffin, paraffin wax, microwax, polyethylene wax, Fischer-Tropsch wax, and $\alpha$-olefin oligomers having from 3 to 12 carbons. Here, the term aliphatic hydrocarbon includes alicyclic hydrocarbons. The number average molecular weight of the aliphatic hydrocarbon is preferably 5000 or less.

Examples of the polyolefin wax include polyethylene wax, polypropylene wax, and polyethylene propylene wax, and polyethylene wax is preferable.

The polyolefin wax may be unmodified or modified. Examples of the modified polyolefin wax include vinyl ester-modified polyolefin wax, acid-modified polyolefin wax, and oxidized polyolefin wax, and oxidized polyolefin wax is preferable. The oxidized polyolefin wax exhibits excellent miscibility with the polyalkylene terephthalate resin, and tends to effectively suppress mold deposits of the obtained resin composition.

The oxidized polyolefin wax can be obtained by subjecting a corresponding unmodified polyolefin wax to an oxidation treatment. Examples of the oxidized polyethylene wax include Licowax (trade name) PED521, Licowax PED522, and Licowax PED121, and Ceridust (trade name) 3715, which are all available from Clariant AG.

For details on commercially available polyolefin waxes, reference can be made to the description in paragraph [0028] of JP 2022-140470, the contents of which are incorporated herein by reference.

The weight average molecular weight of the polyolefin wax is preferably 800 or greater, more preferably 1000 or greater, even more preferably 1500 or greater, still more preferably 2000 or greater, and yet more preferably 2500 or greater. When the weight average molecular weight is equal to or greater than the above lower limit value, the glowing time tends to be further shortened. The weight average molecular weight of the polyolefin wax is preferably 30000 or less, more preferably 20000 or less, even more preferably 15000 or less, and further preferably 10000 or less. When the weight average molecular weight is equal to or less than the above upper limit value, fluidity of the resin composition during molding tends to be further improved.

The weight-average molecular weight can be measured by gel permeation chromatography (GPC) using the HLC-8320GPC EcoSEC available from Tosoh Corporation with tetrahydrofuran being used as the solvent and with a Shodex KF-G column, three KF-805L columns, and a KF-800D column being used as the columns at column temperatures of 40°C and a flow of 1.2 mL/min. Moreover, the weight average molecular weight can be measured as a polystyrene-equivalent value detected by a detector (UV-8320) at a detection wavelength of 254 nm.

In a case in which the resin composition of the present embodiment contains two or more types of polyolefin waxes, the weight average molecular weight of the mixture of polyolefin waxes is used.

The dropping point of the polyolefin wax is preferably 165°C or lower, more preferably 160°C or lower, even more preferably 155°C or lower, still more preferably 150°C or lower, yet more preferably 145°C or lower, even more preferably 140°C or lower, still even more preferably 135°C or lower, and particularly preferably 130°C or lower, and is preferably 80°C or higher, more preferably 85°C or higher, even more preferably 85°C or higher, yet even more preferably 90°C or higher, and still more preferably 95°C or higher.

To obtain the dropping point, the polyolefin wax is heated until it changes from a solid to a liquid state, and the dropping point is the temperature at which the first drop of the molten substance drips from a standardized cup having a 2.8 mm opening.

With regard to the release agent, in addition to the above, reference can be made to the description in paragraphs [0063] to [0077] of JP 2018-070722 A and to the description in paragraphs [0090] to [0098] of JP 2019-123809 A, the contents of which are incorporated herein by reference.

Relative to the total of 100 parts by mass of the polyalkylene terephthalate resin and the polycarbonate resin, the content of the release agent in the resin composition of the present embodiment is preferably 0.01 parts by mass or greater, more preferably 0.1 parts by mass or greater, even more preferably 0.3 parts by mass or greater, and still more preferably 0.5 parts by mass or greater, and depending on the application and the like, the content may be 0.8 parts by mass or greater or 1.0 parts by mass or greater. The content of the release agent is also preferably 5 parts by mass or less, more preferably 4 parts by mass or less, even more preferably 3 parts by mass or less, and yet even more preferably 2 parts by mass or less, and depending on the application and the like, the content may be 1 part by mass or less. When the content of the release agent is equal to or greater than the above lower limit value, the mold releasability of the obtained molded article tends to be further improved. Moreover, when the content is equal to or less than the above upper limit value, bleed-out of the obtained molded article can be effectively suppressed.

The resin composition may contain only one type of release agent, or may contain two or more types of release agents. In a case in which two or more types are contained, the total amount thereof is preferably within the above range.

Nucleating Agent

The resin composition of the present embodiment may further contain a nucleating agent. Containing a

nucleating agent promotes crystallization of the resin composition.

The type of nucleating agent is not particularly limited, and the nucleating agent may be an inorganic nucleating agent or an organic nucleating agent, and an organic nucleating agent is more preferable. The use of an organic nucleating agent enables a reduction in the amount of the nucleating agent to be blended, and can further improve the mechanical strength and shrinkage rate of the obtained molded article.

Examples of inorganic nucleating agents include talc, boron nitride, mica, kaolin, barium sulfate, sodium phosphate, silicon nitride, and molybdenum disulfide, and among these, talc, barium sulfate, sodium phosphate, and boron nitride are preferable, and talc is more preferable because the use of talc tends to increase the rigidity of the resin composition and also moldability.

The organic nucleating agent is preferably an organic alkali metal salt, more preferably an organic alkali metal carboxylate, and still more preferably an alkali metal salt (preferably a sodium salt or a potassium salt, and more preferably a sodium salt) of a fatty acid (preferably a fatty acid having from 5 to 50 carbons). Specific examples of the organic nucleating agent include ionomers, sodium benzoate, sodium palmitate, sodium stearate, sodium behenate, and sodium montanate, among which sodium stearate, sodium behenate, and sodium montanate are more preferable, and sodium montanate is even more preferable. The use of an organic alkali metal salt is more preferable because such use enhances the effect as a crystal nucleating agent and improves the crystallinity of the resin composition, and therefore, the molded article molded from the resin composition tends to exhibit a well-balanced improvement in various performance areas indicated in the below-described Examples section.

Relative to the total of 100 parts by mass of the polyalkylene terephthalate resin and the polycarbonate resin, the content of the nucleating agent (preferably talc) in the resin composition of the present embodiment is preferably 0.1 parts by mass or greater, more preferably 0.2 parts by mass or greater, still more preferably 0.5 parts by mass or greater, even more preferably 1.0 parts by mass or greater, and yet even more preferably 1.5 parts by mass or greater. When the content of the nucleating agent is equal to or greater than the above lower limit value, the mold releasability and mechanical strength of the molded article tend to be improved. In particular, the flame retardancy of the resin composition can be further improved by containing the nucleating agent (preferably talc) at an amount of preferably 1.6 parts by mass or greater, and more preferably 1.8 parts by mass or greater, relative to the total of 100 parts by mass of the polyalkylene terephthalate resin and the polycarbonate resin. The upper limit of the content of the nucleating agent relative to the total of 100 parts by mass of the polyalkylene terephthalate resin and the polycarbonate resin is 10 parts by mass or less, preferably 8 parts by mass or less, more preferably 5 parts by mass or less, and still more preferably 3 parts by mass or less. When the content is equal to or less than the above upper limit value, decomposition of the resin is suppressed, and thereby the mechanical strength, and particularly, the impact resistance of the molded article tend to be improved.

The resin composition of the present embodiment may contain only one type of nucleating agent or two or more types of nucleating agents. In a case in which two or more types are contained, the total amount thereof is preferably within the above range.

Additional Component

The resin composition of the present embodiment may contain an additional component as necessary as long as the desired physical properties are not significantly impaired. Examples of additional components include thermoplastic resins other than the polyarylene terephthalate resin and the polycarbonate resin, and various resin additives. One type of additional component may be contained, or two or more types of additional components may be contained in any combination and ratio.

Specific examples thereof include reactive compounds (epoxy compounds and the like), antistatic agents, antifogging agents, antiblocking agents, fluidity improvers, plasticizers, dispersants, and antibacterial agents.

In addition, additives described in paragraphs [0047] to [0103] of WO 2021/241471 A1, the contents of which are incorporated herein by reference, can be blended in the resin composition of the present embodiment within a range that does not depart from the gist of the present invention.

In the resin composition of the present embodiment, the total of the polyalkylene terephthalate resin, the polycarbonate resin, the elastomer, the flame retardant, and the components blended as necessary is 100 mass%.

In one embodiment of the present invention, in the resin composition of the present embodiment, the total amount of the polyalkylene terephthalate resin, the polycarbonate resin, the elastomer, and the flame retardant accounts for preferably 85 mass% or more, more preferably 90 mass% or more, even more preferably 93 mass% or more, and still more preferably 95 mass% or more, of the resin composition.

In another embodiment of the present invention, in the resin composition of the present embodiment, the total amount of the polyalkylene terephthalate resin, the polycarbonate resin, the elastomer, the flame retardant, and the optionally blended glass fibers accounts for preferably 85 mass% or more, more preferably 90 mass% or more, even more preferably 93 mass% or more, and still more preferably 95 mass% or more, of the resin composition.

In addition, in one embodiment of the present invention, in the resin composition of the present embodiment, the

total amount of the polyalkylene terephthalate resin, the polycarbonate resin, the elastomer, the flame retardant, the flame retardant aid, the dripping inhibitor, the transesterification inhibitor, the non-fibrous inorganic filler, the antioxidant, the ultraviolet absorber, the release agent, and the optionally blended glass fibers accounts for preferably 90 mass% or more, more preferably 95 mass% or more, even more preferably 97 mass% or more, and still more preferably 99 mass% or more, of the resin composition.

Physical Properties of Resin Composition

The resin composition of the present embodiment preferably has a high content (recycled proportion (mass%)) of recycled product.

Specifically, the content of recycled product in the resin composition is preferably 10 mass% or greater, more preferably 20 mass% or greater, still more preferably 30 mass% or greater, and even more preferably 35 mass% or greater. The upper limit of the recycled product may be 100 mass%, but on a practical level, the upper limit is 50 mass% or less.

In addition, in the resin composition of the present embodiment, from 40 to 60 mass% of the resin component can be a recycled product.

The recycled product contained in the resin composition of the present embodiment is preferably a post-consumer recycled (PCR) product.

The nominal strain at break of the resin composition of the present embodiment is preferably high.

Specifically, when the resin composition is injection-molded into a multipurpose test piece A1 according to JIS K7139, the nominal strain at break of the multipurpose test piece A1 as measured according to JIS K7161-1 is preferably 50% or greater, more preferably 74% or greater, even more preferably 80% or greater, and still even more preferably 90% or greater. The upper limit of the nominal strain at break is not particularly established, but the required performance is sufficiently satisfied even when the nominal strain at break is 130% or less, for example.

The high nominal strain at break can be achieved, for example, by using a recycled polycarbonate resin derived from bottles or sheets, which tend to contain a relatively small amount of foreign matter, by using a polycarbonate resin with a low MVR, by using a polyalkylene terephthalate resin with a high intrinsic viscosity, or by blending an elastomer.

The resin composition of the present embodiment preferably has a high crystallization temperature (Tc). When the Tc is high, a molded article having excellent mold releasability tends to be obtained. In addition, a resin composition having excellent moldability is obtained.

When the Tc of the resin composition of the present embodiment is measured in accordance with JIS K7121, the Tc value at the first cycle is preferably 180°C or higher, more preferably 182°C or higher, even more preferably 184°C or higher, and still more preferably 185°C or higher. The upper limit value is preferably 200°C or lower.

When the Tc of the resin composition of the present embodiment is measured in accordance with JIS K7121, the Tc value at the second cycle is preferably 143°C or higher, more preferably 150°C or higher, even more preferably 154°C or higher, and still more preferably 157°C or higher. The upper limit value is preferably 190°C or lower.

The high crystallization temperature can be achieved, for example, by configuring the resin composition to contain a transesterification inhibitor, by setting the branching amount in the recycled polycarbonate to equal to or less than the upper limit value, and by avoiding excessively high temperatures and stagnation when producing the resin composition.

The resin composition of the present embodiment preferably exhibits excellent impact resistance.

Specifically, when the resin composition of the present embodiment is injection-molded into a multipurpose test piece A1 in accordance with JIS K7139, the Charpy un-notched impact strength (unit: $kJ/m^2$) measured at a temperature of 23°C according to JIS K7111-1 is preferably 21 $kJ/m^2$ or greater, more preferably 25 $kJ/m^2$ or greater, even more preferably 30 $kJ/m^2$ or greater, further preferably 35 $kJ/m^2$ or greater, still further preferably 40 $kJ/m^2$ or greater, even further preferably 45 $kJ/m^2$ or greater, particularly preferably 50 $kJ/m^2$ or greater, and more particularly preferably 55 $kJ/m^2$ or greater. The practical upper limit of the Charpy un-notched impact strength is, for example, 80 $kJ/m^2$ or less.

The impact resistance can be achieved, for example, by increasing the proportion of the polycarbonate resin in the resin composition, by using a recycled polycarbonate resin having a low MVR, by blending an elastomer, or by blending titanium oxide. In particular, the resin composition of the present embodiment is valuable in that excellent impact resistance can be achieved despite the incorporation of a flame retardant.

The resin composition of the present embodiment preferably has excellent flame retardancy.

In particular, when the resin composition is molded into a test piece having a thickness of 0.74 mm or 1.0 mm for a UL-94 test, the flame retardancy according to the UL-94 test satisfies V-0.

When the resin composition is molded into a test piece for the UL-94 test with the test piece having a thickness of 0.74 mm or 1.0 mm, the total combustion time in accordance with the UL-94 test is preferably 50 seconds or less, more preferably 45 seconds or less, even more preferably 40 seconds or less, still more preferably 35 seconds or less, yet even more preferably 30 seconds or less, even more preferably 25 seconds or less, still more preferably 20 seconds or less, and particularly preferably 18 seconds or less. The lower limit value of the total combustion time is ideally 0 seconds, but on a

practical level is 1 second or longer.

The flame retardancy can be achieved by blending a flame retardant, a flame retardant aid, a dripping inhibitor, and the like, and further blending, for example, titanium oxide.

The resin composition of the present embodiment preferably exhibits excellent heat resistance.

Specifically, the deflection temperature under load (DTUL) at a load of 1.8 MPa when the resin composition is molded into an ISO tensile test piece (4 mm thick) is preferably 180°C or higher, more preferably 185°C or higher, even more preferably 186°C or higher, and yet even more preferably 188°C or higher. The upper limit of the deflection temperature under load is not particularly established, but the required performance is sufficiently satisfied even if the deflection temperature under load is 220°C or less.

The resin composition of the present embodiment preferably exhibits excellent fluidity.

In particular, the melt volume rate (MVR) of the resin composition of the present embodiment as measured in accordance with ISO 1133 at 250°C and a load of 5 kg is preferably 3 $cm^3$/10 minutes or greater, may be 10 $cm^3$/10 minutes or greater, or may be 15 $cm^3$/10 minutes or greater. The practical upper limit value of the MVR is, for example, 50 $cm^3$/10 minutes or less.

The resin composition of the present embodiment preferably exhibits excellent tracking resistance.

In particular, when the resin composition is injection-molded to dimensions of 100 mm × 100 mm × 3 mm thick, the comparative tracking index (CTI) value measured in accordance with UL 746A is preferably equal to or greater than 600 V. The CTI upper limit value is not particularly established, but, for example, the required performance is sufficiently satisfied even when the CTI is 1000 V or less.

The tracking resistance can be achieved, for example, by blending an elastomer of an optimal type and amount and optimizing the blending ratio of the polycarbonate resin and the polyalkylene terephthalate resin, by blending titanium oxide, and by blending a flame retardant of an optimal type and amount.

The resin composition of the present embodiment can reduce the peak pressure during molding.

Specifically, the peak pressure during molding when the resin composition of the present embodiment is molded into a multipurpose test piece A1 in accordance with JIS K7139 can be set to 102 MPa or less, 96 MPa or less, or 95 MPa or less. The lower limit value of the peak pressure during molding is, for example, equal to or greater than 40 MPa.

The low peak pressure during molding can be achieved, for example, by using a polycarbonate resin having a low MVR value, by optimizing the type and amount of an elastomer, and the like.

The recyclability is calculated according to the description in the Examples section below. The nominal strain at break, the crystallization temperature (Tc), the impact resistance, the flame retardancy, the deflection temperature under load, the MVR, the tracking resistance, and the peak pressure during molding are measured according to the description in the Examples section below.

Method for Producing Resin Composition

The resin composition of the present embodiment can be produced by a usual method for producing a resin composition containing a thermoplastic resin. For example, the resin composition of the present embodiment may be produced by a method in which the polyalkylene terephthalate resin, the polycarbonate resin, the flame retardant, and other components blended as necessary are inserted into an extruder and melt-kneaded. A reinforcing filler may be side fed into the extruder. In addition, in a case in which the resin composition contains a colorant, the colorant may be blended and melt-kneaded as a masterbatch that is mixed with a thermoplastic resin in advance.

The heating temperature during melt-kneading can usually be appropriately selected from a range of from 220°C to 350°C, preferably a range of from 220°C to 320°C, and more preferably a range of from 220°C to 280°C.

Method for Producing Molded Article

The resin composition of the present embodiment is molded according to a known method.

The method for producing the molded article is not particularly limited, and any molding method generally employed for resin compositions can be employed. Examples thereof include an injection molding method, an ultrahigh-speed injection molding method, an injection compression molding method, a two color molding method, a hollow molding method such as a gas assisted method, a molding method using an insulated mold, a molding method using a rapid heating mold, a foam molding method (including a supercritical fluid), an insert molding method, a molding method of in-mold coating molding (IMC), an extrusion molding method, a sheet molding method, a thermoforming method, a rotational molding method, a lamination molding method, a press molding method, and a blow molding method, and among these, an injection molding method is preferable.

For details on the injection molding method, reference can be made to the description in paragraphs [0113] to [0116] of JP 6183822 B, the content of which is incorporated herein by reference.

The mold temperature when molding with a mold, such as injection molding, is preferably from 40 to 150°C.

Application

An example of an application of the resin composition of the present embodiment is pellets.

The molded article of the present embodiment is formed from the resin composition of the present embodiment or pellets of the present embodiment.

The molded article of the present embodiment can be used in various applications, such as, for example, various storage containers, electrical and electronic equipment components, office automation (OA) equipment components, household electrical appliance components, mechanical mechanism components, and vehicle components (vehicle mechanism components, in-vehicle housing components).

Examples of the vehicle components include a lamp housing, reflector, bezel, and extension, and a connector, an ECU case, a housing of a head-up display, a housing for an in-vehicle camera or a millimeter-wave radar, a battery case, an inverter, a high-voltage connector, a sensor housing, and a housing of a charging member for an electric vehicle (EV).

Examples of the electrical and electronic components include display devices such as personal computers, gaming devices, and televisions, printers, copiers, scanners, fax machines, electronic notebooks and PDAs, electronic desktop calculators, electronic dictionaries, cameras, video cameras, mobile phones, battery packs, drives and readers for recording media, a housing for a computer mouse, a numeric keypad, a CD player, an MD player, a portable radio/audio player, or the like, covers, keyboards, buttons, switch members, power meter housings, battery cases, trays for battery conveyance, relays, sensors, actuators, terminal switches, and grill cooking equipment components.

Examples

Hereinafter, the present invention will be more specifically described with reference to examples. The materials, usage amounts, proportions, treatment contents, treatment procedures, and the like presented in the following examples can be appropriately changed without departing from the gist of the present invention. Thus, the scope of the present invention is not limited to the following specific examples.

When a measuring instrument or the like used in the examples is not readily available due to discontinuation or the like, other instruments having equivalent performance can be used for the measurements.

1. Raw Materials

The raw materials described in Tables 1 and 2 below were used.

[Table 1]

| Raw Material | Details |
|---|---|
| PBT-1 | Polybutylene terephthalate resin<br>"NOVADURAN 5026" (trade name) available from Mitsubishi Chemical Corporation<br>Intrinsic viscosity: 1.26 dL/g |
| PBT-2 | Polybutylene terephthalate resin<br>"NOVADURAN 5007" (trade name) available from Mitsubishi Chemical Corporation<br>Intrinsic viscosity: 0.70 dL/g |
| PBT-3 | Polybutylene terephthalate resin<br>"NOVADURAN 5008" (trade name) available from Mitsubishi Chemical Corporation<br>Intrinsic viscosity: 0.85 dL/g |
| PC-1 | Material recycled polycarbonate resin (PCR)<br>Derived from water bottles/sheets<br>"PC3011" (trade name) available from Aucell |
| PC-2 | Material recycled polycarbonate resin (PCR)<br>Derived from electric power meter<br>"PC116X" (trade name) available from HONGYU |
| PC-3 | Material recycled polycarbonate resin (PCR)<br>Derived from headlamp<br>"PC2010ANC" (trade name) available from Aucell |

(continued)

| Raw Material | Details |
|---|---|
| PC-4 | Material recycled polycarbonate resin (PCR)<br>Derived from water bottles<br>"PCRGAWB" (trade name) available from HONGYU |
| PC-5 | Virgin polycarbonate resin<br>"NOVAREX M7027BF" (trade name) available from Mitsubishi Engineering-Plastics Corporation |
| PC-6 | Virgin polycarbonate resin<br>"NOVAREX 7030PJ" (trade name) available from Mitsubishi Engineering-Plastics Corporation |
| Elastomer | Core/shell type graft copolymer composed of polybutyl acrylate (core)/polymethyl methacrylate (shell)<br>"PARALOID EXL-2313" (trade name) available from The Dow Chemical Company |
| Flame retardant | Brominated polycarbonate, "FR-53" (trade name) available from Mitsubishi Engineering-Plastics Corporation<br>Br content: 56% |
| Antimony compound | Antimony trioxide masterbatch<br>Antimony trioxide/PBT resin: 80/20 (mass ratio)<br>"405001" (trade name) available from SICA |

[Table 2]

| Raw Material | Details |
|---|---|
| Dripping inhibitor | Polytetrafluoroethylene (suspension polymerization)<br>"TF1750" (trade name) available from The 3M Company |
| Transesterification inhibitor-1 | Zinc stearyl acid phosphate<br>"JP-518Zn" (trade name) available from Johoku Chemical Co., Ltd. |
| Transesterification inhibitor-2 | Octadecyl phosphate<br>"ADK STAB AX-71" (trade name) available from ADEKA Corporation |
| Titanium oxide | Titanium dioxide<br>"KRONOS 2233" (trade name) available from Kronos Worldwide, Inc.<br>Rutile-type titanium oxide treated with alumina-containing inorganic compound and siloxane-containing organic compound |
| Antioxidant | Hindered phenolic antioxidant<br>"ADK STAB AO-60" (trade name) available from ADEKA Corporation |
| Ultraviolet absorber | Benzotriazole-based ultraviolet absorber<br>"SEESORB709" (trade name) available from Shipro Kasei Kaisha, Ltd. |
| Release agent-1 | Microcrystalline wax<br>"Hi-Mic-1080" (trade name) available from Nippon Seiro Co., Ltd. |
| Release agent-2 | Oxidized polyethylene wax<br>"LICOWAX PED522" (trade name) available from Clariant |
| EL-1 | Ethylene-methyl acrylate-glycidyl methacrylate copolymer<br>"AX-8700" (trade name) available from Arkema S.A.<br>MFR: 9 g/10 min (190°C × 2.16 kgf) |
| EL-2 | Methyl methacrylate-butyl acrylate block copolymer<br>"LA2330" (trade name) available from Kuraray Co., Ltd.,<br>MFR: 3.7 g/10 min (190°C × 2.16 kgf) |
| Nucleating agent | Talc<br>"LC88-2" (trade name) available from Dandong Ritian Nano Technology Co., Ltd. |

(continued)

| Raw Material | Details |
|---|---|
| Glass fiber | Glass fiber<br>"T-187H" (trade name) available from Nippon Electric Glass Co., Ltd. Number-average fiber diameter: 13 μm, number-average fiber length: 3 mm |
| CB | Carbon black masterbatch<br>Carbon black/polybutylene terephthalate resin = 19/81 (mass ratio)<br>Carbon Black:<br>"#650B" (trade name) available from Mitsubishi Chemical Corporation<br>Polybutylene terephthalate:<br>"NOVADURAN 5008" (trade name) available from Mitsubishi Chemical Corporation |

Measurement of Amount of Bisphenol A (BPA Amount) in Polycarbonate Resin (Virgin Product and Recycled Product)

A polycarbonate resin was dissolved in a dichloromethane solution, methanol was added dropwise thereto to re-precipitate the polymer component, and the mixture was filtered. The filtrate was then dried and dissolved in 5 mL of methanol. This methanol solution was analyzed by high-performance liquid chromatography (using the "LC-20AD Prominence" available from Shimadzu Corporation) to determine the bisphenol A content. A calibration curve created from a separately prepared standard substance was used to calculate the bisphenol A content.

Measurement of Branching Amount of Polycarbonate Resin (Virgin Product and Recycled Product)

The branching amount of the polycarbonate resin in the present embodiment means the total content (unit: ppm by mass) of PSA, PSA-Me, PBA, and dicarboxylic acids (DA1, DA2) (structures shown below) obtained after hydrolysis of the polycarbonate resin.

Specifically, 0.5 g of the polycarbonate resin was dissolved in 5 mL of methylene chloride, after which 45 mL of methanol and 5 mL of a 25 mass% aqueous sodium hydroxide solution were added thereto, and the mixture was stirred at 70°C for 30 minutes and hydrolyzed (methylene chloride solution). Subsequently, 6N HCl was added to the methylene chloride solution to adjust the pH of the solution to about 2, and pure water was added to adjust the volume to 100 mL.

Next, 20 μL of the adjusted methylene chloride solution was injected into a liquid chromatograph, the contents of PSA, PSA-Me, PBA, and dicarboxylic acids (DA1 and DBA2) having the structures shown below were measured, and the total amount thereof was used as the branching amount (units: ppm by mass) of the polycarbonate resin.

The liquid chromatograph and measurement conditions were as follows.

Liquid chromatograph: LC-10AD available from Shimadzu Corporation
Column: YMC PACK ODS-AM M-307-3
4.6 mmID × 75 mmL
Detector: UV 280 nm
Eluent: (A) 0.05% aqueous trifluoroacetic acid solution, (B) methanol
Gradient conditions: 0 min (B = 40%), 25 min (B-95%)

The contents of PSA, PSA-Me, PBA, and dicarboxylic acids (DA1, DA2) were calculated from the respective peak areas based on a calibration curve created using bisphenol A.

The PSA, PSA-Me, PBA, and dicarboxylic acids (DA1, DA2) were as follows.

[Chem. 10]

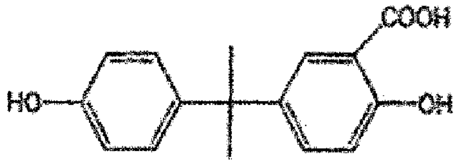

PSA

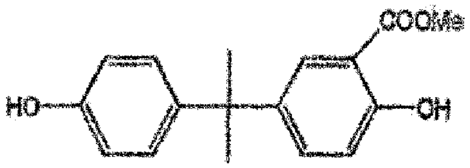

PSA-Me

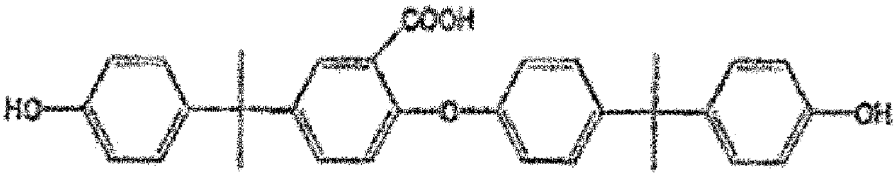

PBA

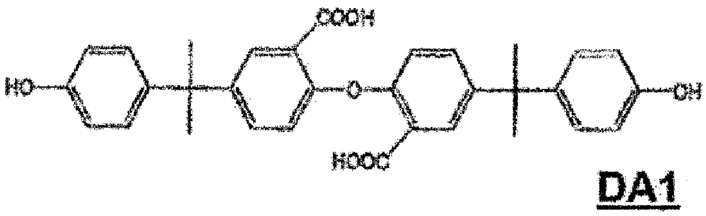

DA1

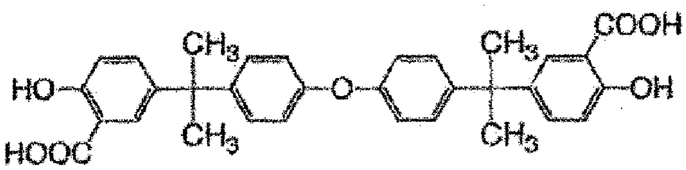

DA2

Measurement of MVR of Polycarbonate Resin (Virgin Product and Recycled Product)

The melt volume rate of the polycarbonate resin (virgin product and recycled product) was measured in accordance with ISO 1133 under the conditions of a temperature 300°C and a load of 1.20 kgf. The MVR was expressed in units of $cm^3$/10 min.

Degree of Dispersion (Mw/Mn) of Polycarbonate Resin (Virgin Product and Recycled Product)

The weight average molecular weight (Mw) and the number average molecular weight (Mn) of the polycarbonate resin (virgin product and recycled product) were measured using the HLC-8320GPC/EcoSEC (available from Tosoh Corporation) and calculated in calibration with polystyrene. The measurement conditions were as follows.

Column: Shodex KF-G + KF-805L (quantity of 3) + KF-800D
Detector: UV detector, wavelength of 254 nm
Column temperature: 40°C
Eluent: Tetrahydrofuran (THF)

The degree of dispersion (Mw/Mn) was calculated based on the obtained Mw and Mn.
In the present specification, Mw and Mn are values measured by the above method for all of the components.

In addition, in a case in which two or more types of polycarbonate resins were contained, the Mw and Mn of the polycarbonate resin were respectively the Mw and Mn of the mixture. The same applies to the other components.

Measurement of Amounts of Metal Elements

A qualitative and semi-quantitative analysis of metal elements (Al, Fe, P) in the polycarbonate resin was carried out by ICP emission spectrometry. In this case, as a pretreatment, 200 mg of a sample was weighed and subjected to Kjeldahl wet decomposition (sulfuric acid-nitric acid, sulfuric acid-hydrogen peroxide), the volume was adjusted to 50 mL, and then ICP emission spectrometry was carried out by a one-point calibration method with acid concentration matching. The amounts of metal elements were expressed in units of ppm by mass.

The ICP emission spectrometry was carried out by axial/radial photometry using the "iCAP 7600 Duo iCAP 76000 uo" available from Thermo Fisher Scientific.

Details of the above PC-1 to PC-6 are as follows.

[Table 3]

| | | PC-1 | PC-2 | PC-3 | PC-4 | PC-5 | PC-6 |
|---|---|---|---|---|---|---|---|
| BPA amount | ppm | 27 | 53 | 28 | 101 | 10 | - |
| PSA | ppm | 340 | 145 | 10 | 195 | 400 | - |
| PSA-Me | ppm | 650 | 730 | 160 | 370 | 1190 | - |
| PBA | ppm | 630 | 40 | ND | 270 | 1300 | - |
| DA1 + DA2 | ppm | 560 | 195 | 2 | 215 | 1210 | - |
| Branching amount | ppm | 2180 | 1110 | 172 | 1050 | 4100 | - |
| MVR | $cm^3/10$ min | 6 | 13 | 14 | 9 | 3 | 1 |
| Mw/Mn | - | 3.1 | 3.0 | 3.0 | 3.2 | 3.1 | 3.3 |
| Al | ppm | 9 | 3 | 0.4 | 3 | ND | - |
| Fe | ppm | 5 | 1 | 0.3 | 10 | ND | - |
| P | ppm | 8 | 48 | 37 | 9 | 2 | - |
| *ND: Below the detection limit | | | | | | | |

2. Examples 1-1 to 1-3, Comparative Example 1, and Reference Example 1

Compound

The components described in Table 1 or Table 2 were uniformly mixed with a tumbler mixer at the proportions described in Table 4 (the components in Table 4 are described in parts by mass). The obtained mixture was supplied to a twin-screw extruder ("TEX30α" available from The Japan Steel Works, Ltd.). The resin composition was melt-kneaded under conditions including a cylinder temperature setting of 260°C and a screw rotational speed of 200 rpm, and was then rapidly cooled in a water tank and pelletized using a pelletizer, and thereby pellets of the resin composition were obtained.

Recycled Proportion (mass%)

The proportion (mass%) of the recycled component to the total amount of the resin composition was calculated.

Nominal Strain at Break

The resin composition pellets obtained above were dried at 120°C for 5 hours, and then injection-molded into a JIS K7139 multipurpose test piece A1 (4 mm thick) under conditions including a cylinder temperature of 250°C and a mold temperature of 80°C using the "J-85AD-60H" injection-molding machine available from The Japan Steel Works, Ltd.

The nominal tensile strain at break was determined based on JIS K7161-1.

Crystallization Temperature (Tc)

The crystallization temperature of the pellets of the resin composition described above was measured using a differential scanning calorimeter (DSC) according to JIS K7121. In a nitrogen atmosphere, the temperature was increased from 40°C to 300°C at a temperature increase rate of 20°C/min, and the temperature was maintained at 300°C for 3 minutes, after which the temperature was lowered to 40°C at a temperature decrease rate of -20°C/min. This process was defined as one cycle, and two cycles were carried out. The maximum peak temperature due to crystallization during the temperature decrease in each cycle was defined as the crystallization temperature.
The "DSC7020" available from Hitachi High-Tech Science Corporation was used as the differential scanning calorimeter.

Charpy Notched Impact Strength

The resin composition pellets obtained above were dried at 120°C for 5 hours, and then injection-molded into a JIS K7139 multipurpose test piece A1 (4 mm thick) under conditions including a cylinder temperature of 250°C and a mold temperature of 80°C using the "J-85AD-60H" injection-molding machine available from The Japan Steel Works, Ltd.
Using the multipurpose test piece (4 mm thick), the Charpy un-notched impact strength (unit: $KJ/m^2$) was measured based on the JIS K7111-1 standard.

Flame Retardancy

The resin composition pellets obtained above were dried at 120°C for 5 hours, and then injection-molded into a combustion test piece (12.7 mm wide × 127 mm long × 1.0 mm thick) using an injection-molding machine ("J-50AD" available from The Japan Steel Works, Ltd.) under conditions including a cylinder temperature of 250°C and a mold temperature of 80°C.
The obtained combustion test piece was allowed to stand in an atmosphere at 70°C for 1 week, after which the flame retardancy was evaluated according to the method set forth in Subject 94 (UL94) of the Underwriters Laboratories.

Tracking Resistance (CTI)

The pellets obtained above were dried at 120°C for 6 hours until just before being subjected to molding, after which the pellets were molded into a flat test piece measuring 100 mm × 100 mm × 3 mm thick using an injection-molding machine ("NEX-80" available from Nissei Plastic Industrial Co., Ltd.) at a cylinder temperature of 260°C. The flat test piece was then subjected to a tracking resistance test stipulated in Section 23 of the UL 746A standard, and the tracking resistance was measured in accordance with ASTM D3638. An electrolytic liquid (0.1% aqueous ammonium chloride solution, resistivity at 23°C of 385 Ω·cm) was dripped from a nozzle of the apparatus at intervals of 30 seconds, a voltage of 600 V or lower (in 25 V steps) was applied between both platinum electrodes, the number of drops of the electrolytic liquid until tracking occurred was measured, and the maximum voltage (unit: V) at which the average value of five rounds of this process was 50 drops was determined.

Peak Pressure (MPa) During Molding

The injection peak pressure (MPa) was read when the resin composition pellets obtained above were dried at 120°C for 5 hours and then injection-molded into a JIS K7139 multipurpose test piece A1 (4 mm thick) using the "J-85AD-60H" injection-molding machine available from The Japan Steel Works, Ltd under conditions including a cylinder temperature of 250°C and a mold temperature of 80°C.

[Table 4]

| | Example 1-1 | Example 1-2 | Example 1-3 | Comparative Example 1 | Reference Example 1 |
|---|---|---|---|---|---|
| PBT-1 | 47.5 | 58.7 | 58.7 | 58.7 | 58.7 |
| PC-1 | 52.5 | 26.2 | 41.3 | 0.0 | 0.0 |
| PC-2 | 0.0 | 0.0 | 0.0 | 0.0 | 41.3 |
| PC-5 | 0.0 | 0.0 | 0.0 | 41.3 | 0.0 |
| PC-6 | 0.0 | 15.1 | 0.0 | 0.0 | 0.0 |

(continued)

| | Example 1-1 | Example 1-2 | Example 1-3 | Comparative Example 1 | Reference Example 1 |
|---|---|---|---|---|---|
| Elastomer | 10.5 | 10.5 | 10.5 | 10.5 | 10.5 |
| Flame retardant | 11.2 | 11.2 | 11.2 | 11.2 | 11.2 |
| Antimony compound | 3.3 | 3.3 | 3.3 | 3.3 | 3.3 |
| Dripping inhibitor | 0.5 | 0.5 | 0.5 | 0.5 | 0.5 |
| Transesterification inhibitor-1 | 0.4 | 0.4 | 0.4 | 0.4 | 0.4 |
| Titanium oxide | 3.9 | 3.9 | 3.9 | 3.9 | 3.9 |
| Antioxidant | 0.4 | 0.4 | 0.4 | 0.4 | 0.4 |
| Ultraviolet absorber | 0.4 | 0.4 | 0.4 | 0.4 | 0.4 |
| Release agent-1 | 0.7 | 0.7 | 0.7 | 0.7 | 0.7 |
| Recycled proportion (mass%) | 40 | 20 | 32 | 32 | 32 |
| PBT:PC ratio (mass%) | 48/52 | 59/41 | 59/41 | 59/41 | 59/41 |
| Average nominal strain at break (%) | 103 | 75 | 85 | 75 | 47 |
| Tc 1st (°C) | 186 | 186 | 189 | 179 | 189 |
| Tc 2nd (°C) | 160 | 155 | 163 | 142 | 165 |
| Charpy notched impact strength Room temperature ($kJ/m^2$) | 63 | 41 | 22 | 52 | 20 |
| UL-94 combustion test Thickness 1.0 mmt | V-0 | V-0 | V-0 | V-0 | V-0 |
| CTI | ≥600 | ≥600 | ≥600 | ≥600 | ≥600 |
| ISO multipurpose test piece Peak pressure (MPa) during molding | 93 | 94 | 90 | 97 | 85 |

As is clear from the above results, the resin composition of the present invention excelled in various physical properties in a well-balanced manner.

3. Examples 2-1 to 2-5, Comparative Example 2, and Reference Example 2 Compound

The components described in Table 1 or Table 2 were uniformly mixed with the components other than the glass fibers at the proportions described in Table 5 or Table 6 (the components in Table 5 and Table 6 are described in parts by mass) using a tumbler mixer. The obtained mixture was supplied to a twin-screw extruder ("TEX30α" available from The Japan Steel Works, Ltd.) from a main feed port. The cylinder temperature setting of the first kneading section was set to 260°C, and glass fibers were then supplied from the side feeder. After the addition of the glass fibers, the resin composition was melt-kneaded under conditions including a cylinder temperature setting of 260°C and a screw rotational speed of 200 rpm, and was then rapidly cooled in a water tank and pelletized using a pelletizer, and thereby pellets of the resin composition were obtained.

MVR of Resin Composition

The melt volume rate of the obtained resin composition was measured in accordance with ISO 1133 under conditions including a temperature of 250°C and a load of 5 kgf. The MVR was expressed in units of $cm^3/10$ min.

Deflection Temperature Under Load (DTUL)

The obtained resin pellets were dried at 120°C for 6 hours, and then injection-molded into an ISO tensile test piece (4 mm thick) using an injection-molding machine ("J-85AD" available from The Japan Steel Works, Ltd.) under conditions including a cylinder temperature of 250°C and a mold temperature of 80°C.
In accordance with ISO 75-1 and 2, the deflection temperature under load (unit: °C) was measured under a load of 1.80 MPa using the ISO tensile test piece (thickness of 4 mm).

Flame Retardancy

The resin composition pellets obtained above were dried at 120°C for 5 hours, and then injection-molded into a combustion test piece (12.7 mm wide × 127 mm long × 0.74 mm thick) using an injection-molding machine ("J-50AD" available from The Japan Steel Works, Ltd.) under conditions including a cylinder temperature of 250°C and a mold temperature of 80°C.
The obtained combustion test piece was allowed to stand in an atmosphere at 70°C for 1 week, after which the flame retardancy was evaluated according to the method set forth in Subject 94 (UL94) of the Underwriters Laboratories.
For each of five test pieces, a burner flame was applied for 10 seconds to the lower end of the test piece, which was supported vertically, after which the burner flame was removed away from the test piece. As soon as the flame was extinguished, the burner flame was applied for another 10 seconds and then removed.
The total combustion time (unit: seconds) of combustion with flaming of the five test pieces and the results of the UL-94 determination are described in Tables 5 and 6.

[Table 5]

| | | Example 2-1 | Example 2-2 | Example 2-3 | Example 2-4 |
|---|---|---|---|---|---|
| PBT-2 | Parts by mass | 39.6 | 39.6 | 39.6 | 39.6 |
| PBT-3 | Parts by mass | 39.6 | 39.6 | 39.6 | 39.6 |
| PC-1 | Parts by mass | 20.8 | 20.8 | 20.8 | 0.0 |
| PC-2 | Parts by mass | 0.0 | 0.0 | 0.0 | 0.0 |
| PC-3 | Parts by mass | 0.0 | 0.0 | 0.0 | 20.8 |
| PC-4 | Parts by mass | 0.0 | 0.0 | 0.0 | 0.0 |
| PC-5 | Parts by mass | 0.0 | 0.0 | 0.0 | 0.0 |
| Flame retardant | Parts by mass | 16.7 | 16.7 | 16.7 | 16.7 |
| Antimony compound | Parts by mass | 7.1 | 7.1 | 7.1 | 7.1 |
| Dripping inhibitor | Parts by mass | 1.2 | 1.2 | 1.2 | 1.2 |
| EL-1 | Parts by mass | 2.0 | 2.0 | 2.0 | 2.0 |
| EL-2 | Parts by mass | 6.0 | 6.0 | 6.0 | 6.0 |
| Transesterification inhibitor-1 | Parts by mass | 0.2 | 0.6 | 0.0 | 0.2 |
| Transesterification inhibitor-2 | Parts by mass | 0.0 | 0.0 | 0.2 | 0.0 |
| Antioxidant | Parts by mass | 0.6 | 0.6 | 0.6 | 0.6 |
| Nucleating agent | Parts by mass | 2.0 | 2.0 | 2.0 | 2.0 |
| Release agent-2 | Parts by mass | 1.2 | 1.2 | 1.2 | 1.2 |
| Glass fiber | Parts by mass | 60.5 | 60.5 | 60.5 | 60.5 |
| CB | Parts by mass | 4.0 | 4.0 | 4.0 | 4.0 |
| PBT:PC | Mass ratio | 80:20 | 80:20 | 80:20 | 80:20 |
| MVR (250°C × 5 kgf) | $cm^3$/10 min | 17 | 19 | 18 | 6 |
| DTUL (1.8 MPa) | °C | 190 | 190 | 191 | 185 |
| Total combustion time | Seconds | 17 | 15 | 22 | 10 |

(continued)

| | | Example 2-1 | Example 2-2 | Example 2-3 | Example 2-4 |
|---|---|---|---|---|---|
| UL-94 Combustion Test Thickness 0.74 mmt | - | V-0 | V-0 | V-0 | V-0 |

[Table 6]

| | | Example 2-5 | Comparative Example 2 | Reference Example 2 |
|---|---|---|---|---|
| PBT-2 | Parts by mass | 39.6 | 39.6 | 39.6 |
| PBT-3 | Parts by mass | 39.6 | 39.6 | 39.6 |
| PC-1 | Parts by mass | 0.0 | 0.0 | 0.0 |
| PC-2 | Parts by mass | 20.8 | 0.0 | 0.0 |
| PC-3 | Parts by mass | 0.0 | 0.0 | 0.0 |
| PC-4 | Parts by mass | 0.0 | 0.0 | 20.8 |
| PC-5 | Parts by mass | 0.0 | 20.8 | 0.0 |
| Flame retardant | Parts by mass | 16.7 | 16.7 | 16.7 |
| Antimony compound | Parts by mass | 7.1 | 7.1 | 7.1 |
| Dripping inhibitor | Parts by mass | 1.2 | 1.2 | 1.2 |
| EL-1 | Parts by mass | 2.0 | 2.0 | 2.0 |
| EL-2 | Parts by mass | 6.0 | 6.0 | 6.0 |
| Transesterification inhibitor-1 | Parts by mass | 0.2 | 0.2 | 0.2 |
| Transesterification inhibitor-2 | Parts by mass | 0.0 | 0.0 | 0.0 |
| Antioxidant | Parts by mass | 0.6 | 0.6 | 0.6 |
| Nucleating agent | Parts by mass | 2.0 | 2.0 | 2.0 |
| Release agent-2 | Parts by mass | 1.2 | 1.2 | 1.2 |
| Glass fiber | Parts by mass | 60.5 | 60.5 | 60.5 |
| CB | Parts by mass | 4.0 | 4.0 | 4.0 |
| PBT:PC | Mass ratio | 80:20 | 80:20 | 80:20 |
| MVR (250°C × 5 kgf) | $cm^3$/10 min | 23 | 18 | 22 |
| DTUL (1.8 MPa) | °C | 193 | 190 | 192 |
| Total combustion time | Seconds | 18 | 65 | 60 |
| UL-94 Combustion Test Thickness 0.74 mmt | - | V-0 | V-1 | V-1 |

The PBT:PC (mass ratio) in the table was calculated including also the PBT resin in the antimony trioxide masterbatch and the carbon black masterbatch.

As is clear from the above results, the resin compositions of the present invention (Examples 2-1 to 2-5) achieved excellent flame retardancy despite the use of recycled polycarbonate resin.

On the other hand, when the virgin polycarbonate resin (PC-5) with a large branching amount was used (Comparative Example 2), and when the recycled polycarbonate resin (PC-4) having a high content of bisphenol A was used (Reference Example 2), the flame retardancy was poor.

## Claims

1. A resin composition comprising from 5 to 50 parts by mass of a flame retardant relative to a total of 100 parts by mass of a polyalkylene terephthalate resin and a polycarbonate resin,

a mass ratio of the polyalkylene terephthalate resin to the polycarbonate resin being from 10/90 to 90/10 in the total of 100 parts by mass of the polyalkylene terephthalate resin and the polycarbonate resin,
the polycarbonate resin containing a recycling-derived polycarbonate resin, and
the recycling-derived polycarbonate resin having a branching amount of from 50 to 3500 ppm by mass.

**2.** The resin composition according to claim 1, comprising from 1 to 30 parts by mass of an elastomer relative to the total of 100 parts by mass of the polyalkylene terephthalate resin and the polycarbonate resin,

the mass ratio of the polyalkylene terephthalate resin to the polycarbonate resin being from 80/20 to 20/80 in the total of 100 parts by mass of the polyalkylene terephthalate resin and the polycarbonate resin, and
the recycling-derived polycarbonate resin having a melt volume rate (MVR) of from 2 to 11 $cm^3$/10 minutes as measured in accordance with ISO 1133 under conditions including a temperature of 300°C and a load of 1.20 kgf.

**3.** The resin composition according to claim 1 or 2, wherein the recycling-derived polycarbonate resin contains from 10 to 80 ppm by mass of bisphenol A.

**4.** The resin composition according to claim 1, wherein the recycling-derived polycarbonate resin has a melt volume rate (MVR) of from 4 to 30 $cm^3$/10 minutes as measured in accordance with ISO 1133 under conditions including a temperature of 300°C and a load of 1.20 kgf.

**5.** The resin composition according to claim 1, 2, or 4, further comprising from 0.01 to 2 parts by mass of a transesterification inhibitor relative to the total of 100 parts by mass of the polyalkylene terephthalate resin and the polycarbonate resin.

**6.** The resin composition according to claim 1, 2 or 4, wherein a polybutylene terephthalate resin accounts for 50 mass% or more of the polyalkylene terephthalate resin.

**7.** The resin composition according to claim 1, 2, or 4, wherein the flame retardant contains a bromine-based flame retardant.

**8.** The resin composition according to claim 1, 2, or 4, further comprising from 3 to 30 parts by mass of an elastomer relative to the total of 100 parts by mass of the polyalkylene terephthalate resin and the polycarbonate resin.

**9.** The resin composition according to claim 1, 2, or 4, wherein the recycling-derived polycarbonate resin contains aluminum element at a proportion of from 0.2 to 1000 ppm by mass and iron element at a proportion of from 0.2 to 100 ppm by mass.

**10.** The resin composition according to claim 1, 2, or 4, wherein the resin composition is molded into a test piece having a thickness of 0.74 mm or 1.0 mm for a UL-94 test and satisfies a flame retardancy of V-0 according to the UL-94 test.

**11.** The resin composition according to claim 1, 2, or 4, wherein the recycling-derived polycarbonate resin contains at least one of a polycarbonate resin derived from a bottle, a polycarbonate resin derived from a disk, a polycarbonate resin derived from a sheet, a polycarbonate resin derived from a meter cover, or a polycarbonate resin derived from a headlamp lens.

**12.** The resin composition according to claim 1, wherein the recycling-derived polycarbonate resin has a melt volume rate (MVR) of from 4 to 30 $cm^3$/10 minutes as measured in accordance with ISO 1133 under conditions including a temperature of 300°C and a load of 1.20 kgf,

the resin composition further contains from 0.01 to 2 parts by mass of a transesterification inhibitor relative to the total of 100 parts by mass of the polyalkylene terephthalate resin and the polycarbonate resin,
the polyalkylene terephthalate resin comprises a polybutylene terephthalate resin,
the flame retardant comprises a bromine-based flame retardant,
the resin composition further contains from 1 to 30 parts by mass of an elastomer relative to the total of 100 parts by mass of the polyalkylene terephthalate resin and the polycarbonate resin,
the recycling-derived polycarbonate resin contains aluminum element at a proportion from 0.2 to 1000 ppm by mass and iron element at a proportion from 0.2 to 100 ppm by mass, and
the resin composition further contains from 0.1 to 3 parts by mass of carbon black relative to the total of 100 parts

by mass of the polyalkylene terephthalate resin and the polycarbonate resin.

**13.** The resin composition according to claim 1, 2, 4, or 12, wherein the mass ratio of the polyalkylene terephthalate resin to the polycarbonate resin in the total of 100 parts by mass of the polyalkylene terephthalate resin and the polycarbonate resin is from 30/70 to 55/45.

**14.** The resin composition according to claim 1, 2, 4, or 12, wherein the recycling-derived polycarbonate resin includes a polycarbonate resin derived from a bottle and/or a sheet.

**15.** The resin composition according to claim 1, wherein the mass ratio of the polyalkylene terephthalate resin to the polycarbonate resin in the total of 100 parts by mass of the polyalkylene terephthalate resin and the polycarbonate resin is from 30/70 to 55/45,

the recycling-derived polycarbonate resin contains a polycarbonate resin derived from a bottle and/or a sheet,
the resin composition further contains from 0.01 to 2 parts by mass of a transesterification inhibitor relative to the total of 100 parts by mass of the polyalkylene terephthalate resin and the polycarbonate resin, and
the polyalkylene terephthalate resin includes a polybutylene terephthalate resin.

**16.** Pellets of the resin composition described in claim 1, 2, 4, 12, or 15.

**17.** A molded article formed from the resin composition described in claim 1, 2, 4, 12, or 15.

**18.** A molded article formed from the pellets described in claim 16.

**INTERNATIONAL SEARCH REPORT**

International application No.
**PCT/JP2024/028658**

**A. CLASSIFICATION OF SUBJECT MATTER**

***C08L 67/02***(2006.01)i; ***C08L 69/00***(2006.01)i
FI: C08L67/02; C08L69/00

According to International Patent Classification (IPC) or to both national classification and IPC

**B. FIELDS SEARCHED**

Minimum documentation searched (classification system followed by classification symbols)

C08L67/02; C08L69/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-18977 A (KONICA MINOLTA BUSINESS TECHNOLOGIES INC.) 31 January 2013 (2013-01-31)<br>claims, paragraphs [0036], [0043], examples | 1, 10, 16-18 |
| Y | | 2-9, 12-13 |
| A | | 11, 14-15 |
| X | JP 2013-23504 A (KONICA MINOLTA BUSINESS TECHNOLOGIES INC.) 04 February 2013 (2013-02-04)<br>claims, paragraph [0033], example X | 1, 8, 10, 16-18 |
| Y | | 2-6, 9, 11-15 |
| A | | 7 |
| X | JP 2004-244600 A (FUKUVI CHEMICAL INDUSTRY CO., LTD.) 02 September 2004 (2004-09-02)<br>claims, paragraph [0035], examples | 1, 10, 13, 16-18 |
| Y | | 2-9, 11-12, 14-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2024** | **05 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
**PCT/JP2024/028658**

C. DOCUMENTS CONSIDERED TO BE RELEVANT

| Category* | Citation of document, with indication, where appropriate, of the relevant passages | Relevant to claim No. |
|---|---|---|
| Y | JP 2011-52096 A (KONICA MINOLTA BUSINESS TECHNOLOGIES INC.) 17 March 2011 (2011-03-17) claims, paragraphs [0038], [0039], [0085], examples | 2-9, 11-15 |
| A | JP 2011-178949 A (MITSUBISHI CHEMICAL CORPORATION) 15 September 2011 (2011-09-15) paragraph [0130] | 1-18 |

Form PCT/ISA/210 (second sheet) (July 2022)

**INTERNATIONAL SEARCH REPORT**
**Information on patent family members**

International application No.
**PCT/JP2024/028658**

| Patent document cited in search report | Publication date (day/month/year) | Patent family member(s) | Publication date (day/month/year) |
|---|---|---|---|
| JP 2013-18977 A | 31 January 2013 | CN 102827467 A | |
| JP 2013-23504 A | 04 February 2013 | (Family: none) | |
| JP 2004-244600 A | 02 September 2004 | (Family: none) | |
| JP 2011-52096 A | 17 March 2011 | US 2011/0054092 A1<br>claims, paragraphs [0052]-[0055], [0103], examples<br>CN 102002213 A | |
| JP 2011-178949 A | 15 September 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021186025 A1
- WO 2010010669 A1
- JP 2019059813 A
- JP 2012251061 A
- JP 2012177047 A
- JP 2016098242 A
- JP 2019011514 A
- JP 2021063196 A
- JP 2018070722 A
- JP 2019056035 A
- WO 2017038949 A1
- JP 2011057977 A
- JP 2016216534 A
- JP 2018178019 A
- JP 2022140470 A
- JP 2019123809 A
- WO 2021241471 A1
- JP 6183822 B